# EUROPEAN PATENT APPLICATION

(11) **EP 4 432 579 A1**
(43) Date of publication of application: **18.09.2024**
(21) Application number: 24156753.6
(22) Date of filing: 09.02.2024
(51) Int. Cl.: H04B 7/185, H04L 9/40, H04W 12/03, H04W 12/033

(54) **SECURITY FOR STORE AND FORWARD SERVICE VIA SATELLITE ACCESS**

(30) Priority: 12.02.2023 US 202363444987 P
(71) Applicant: Nokia Technologies Oy, 02610 Espoo (FI)
(72) Inventor: MAVUREDDI DHANASEKARAN, Ranganathan, Munich (DE); PRAVINCHANDRA BHATT, Rakshesh, Bangalore (IN)
(74) Representative: Nokia EPO representatives

(57) **Abstract**

Systems, methods, and software of performing a store and forward service for mobile terminated messages to user equipment via satellite access. In an embodiment, a home network of user equipment (UE) receives a first message request from an application server that includes a secured packet destined for the user equipment via satellite access, and determines whether the user equipment supports the store and forward service via satellite access. When the user equipment supports the store and forward service, the home network provides integrity protection of the secured packet at the home network by deriving a message authentication code based on the secured packet and a home network key, and send a second message request to a serving network of the user equipment with the secured packet and the message authentication code contained in a home network container.

## Description

### Technical Field

This disclosure is related to the field of communication systems and, in particular, to next generation networks.

### Background

Next generation networks, such as Fifth Generation (5G), denote the next major phase of mobile telecommunications standards beyond Fourth Generation (4G) standards. In comparison to 4G networks, next generation networks may be enhanced in terms of radio access and network architecture. Next generation networks intend to utilize new regions of the radio spectrum for Radio Access Networks (RANs), such as millimeter wave bands.

With mobile networks widely used across the country and the world, communications may be intercepted or suffer from other kinds of attacks. To ensure security and privacy, the 3rd Generation Partnership Project (3GPP) has set forth security mechanisms for 5G mobile networks, and the security procedures performed within the 5G mobile networks. One of the security procedures between User Equipment (UE) and a 5G mobile network is primary authentication and key agreement. Primary authentication and key agreement procedures enable mutual authentication between the UE and the network, and provide keying material that can be used between the UE and the serving network in subsequent security procedures. After primary authentication, a Non-Access Stratum (NAS) security context and an Access Stratum (AS) security context are created for the UE.

A UE may access a 5G core network through satellite access, which is also referred to as Non-Terrestrial Network (NTN) access. However, the UE may have intermittent satellite access due to mobility of the UE, orbiting of satellites, etc. Therefore, a store and forward service has been suggested for satellite access when satellite connectivity is intermittently or temporarily unavailable. An end-to-end exchange of signaling and/or data traffic is handled as a combination of steps. In one step, signaling/data exchange between the UE and a satellite takes place without the satellite being simultaneously connected to the ground network. In another step, connectivity between the satellite and the ground network is established, and signaling/data exchange between the satellite and the ground network takes place.

However, present security mechanisms may be inefficient or inoperable for a store and forward service.

### Summary

Described herein are enhanced security mechanisms of a store and forward service for satellite access. More particularly, when a packet is sent to a UE via the store and forward service, integrity protection and/or encryption protection may be provided by the enhanced security mechanisms. In an embodiment, integrity protection and/or encryption protection may be provided in the home network of a UE. For example, the home network may provide integrity protection via a Message Authentication Code (MAC) derived from a home network key. In an embodiment, integrity protection and/or encryption protection may be provided in the serving network of a UE. For example, the serving network may provide integrity protection via a MAC derived from a NAS integrity key. In an embodiment, integrity protection and/or encryption protection may be provided in an NTN satellite. For example, the NTN satellite of a UE may provide integrity protection via a MAC derived from an NTN token that is newly-defined herein. One technical benefit is security mechanisms may be applied to packets sent to a UE in a store and forward service even though there is no end-to-end connectivity between a UE and the network.

In an embodiment, a home network of user equipment (UE) receives a first message request from an application server that includes a secured packet destined for the user equipment via satellite access, and determines whether the user equipment supports the store and forward service via satellite access. When the user equipment supports the store and forward service, the home network provides integrity protection of the secured packet at the home network by deriving a message authentication code based on the secured packet and a home network key, and send a second message request to a serving network of the user equipment with the secured packet and the message authentication code contained in a home network container.

In an embodiment, an Access and Mobility Management Function (AMF) of a serving network of user equipment (UE) receives a first message request from a home network of the user equipment, where the first message request includes a packet sent by an application server and destined for the user equipment via satellite access. The AMF determines whether the user equipment supports the store and forward service via satellite access. When the user equipment supports the store and forward service, the AMF provides encryption protection of the packet at the AMF by encrypting the packet based on a non-access stratum encryption key to generate a secured packet, provides integrity protection of the secured packet at the AMF by deriving a message authentication code based on the secured packet and a non-access stratum integrity key, and sends a second message request to a Non-Terrestrial Network (NTN) gateway with the secured packet and the message authentication code contained in a non-access stratum container.

In an embodiment, an AMF receives a first message request from a home network of the user equipment, where the first message request includes a packet sent by an application server and destined for the user equipment via satellite access. The AMF determines whether the user equipment supports the store and forward service via satellite access. When the user equipment supports the store and forward service, the AMF generates a Non-Terrestrial Network (NTN) token, encrypts the NTN token based on a non-access stratum encryption key to generate a ciphered NTN token, and sends a second message request to an NTN gateway with the packet in plain text, the NTN token in plain text, and the ciphered NTN token contained in a serving network container.

Other embodiments may include computer readable media, other systems, or other methods as described below. The various features of the different embodiments may be variously combined with some features included and others excluded to suit a variety of different applications.

The above summary provides a basic understanding of some aspects of the specification. This summary is not an extensive overview of the specification. It is intended to neither identify key or critical elements of the specification nor delineate any scope of the particular embodiments of the specification, or any scope of the claims. Its sole purpose is to present some concepts of the specification in a simplified form as a prelude to the more detailed description that is presented later.

### Description of the Drawings

Some embodiments of the invention are now described, by way of example only, and with reference to the accompanying drawings. The same reference number represents the same element or the same type of element on all drawings.
FIG. 1 illustrates a high-level architecture of a 5G system.
FIG. 2 illustrates a non-roaming architecture of a 5G system.
FIG. 3 is a signaling diagram that illustrates initiation of primary authentication.
FIG. 4 is a signaling diagram that illustrates an authentication procedure.
FIG. 5 illustrates a key hierarchy of a 5G system.
FIG. 6 illustrates a NAS and AS security procedure.
FIGS. 7A-7B illustrate NTN-based NG-RAN architectures.
FIG. 8 illustrates different satellite operation modes.
FIGS. 9A-9B illustrate a store and forward service for MT messages in an illustrative embodiment.
FIG. 10 is a block diagram of a UDM in an illustrative embodiment.
FIG. 11 is a block diagram of an AUSF in an illustrative embodiment.
FIG. 12 is a block diagram of an AMF in an illustrative embodiment.
FIG. 13 is a block diagram of an NTN satellite in an illustrative embodiment.
FIG. 14 is a block diagram of a UE in an illustrative embodiment.
FIG. 15 is a message diagram illustrating a store and forward service for MT messages in an illustrative embodiment.
FIG. 16 is a signaling diagram that illustrates initiation of primary authentication in an illustrative embodiment.
FIG. 17 is a block diagram illustrating a Home Network (HN) container in an illustrative embodiment.
FIGS. 18-19 and 20A-20B are flow charts illustrating a method of performing a store and forward service for MT messages in an illustrative embodiment.
FIG. 21 is a message diagram illustrating a store and forward service for MT messages in an illustrative embodiment.
FIG. 22 is a block diagram illustrating a NAS container in an illustrative embodiment.
FIGS. 23-25 are flow charts illustrating a method of performing a store and forward service for MT messages in an illustrative embodiment.
FIG. 26 is a message diagram illustrating a store and forward service for MT messages in an illustrative embodiment.
FIG. 27 is a block diagram illustrating a Serving Network (SN) container in an illustrative embodiment.
FIG. 28 is a block diagram illustrating an Access Network (AN) container in an illustrative embodiment.
FIGS. 29-32 are flow charts illustrating a method of performing a store and forward service for MT messages in an illustrative embodiment.

### Description of Embodiments

The figures and the following description illustrate specific exemplary embodiments. It will thus be appreciated that those skilled in the art will be able to devise various arrangements that, although not explicitly described or shown herein, embody the principles of the embodiments and are included within the scope of the embodiments. Furthermore, any examples described herein are intended to aid in understanding the principles of the embodiments, and are to be construed as being without limitation to such specifically recited examples and conditions. As a result, the inventive concept(s) is not limited to the specific embodiments or examples described below, but by the claims and their equivalents.

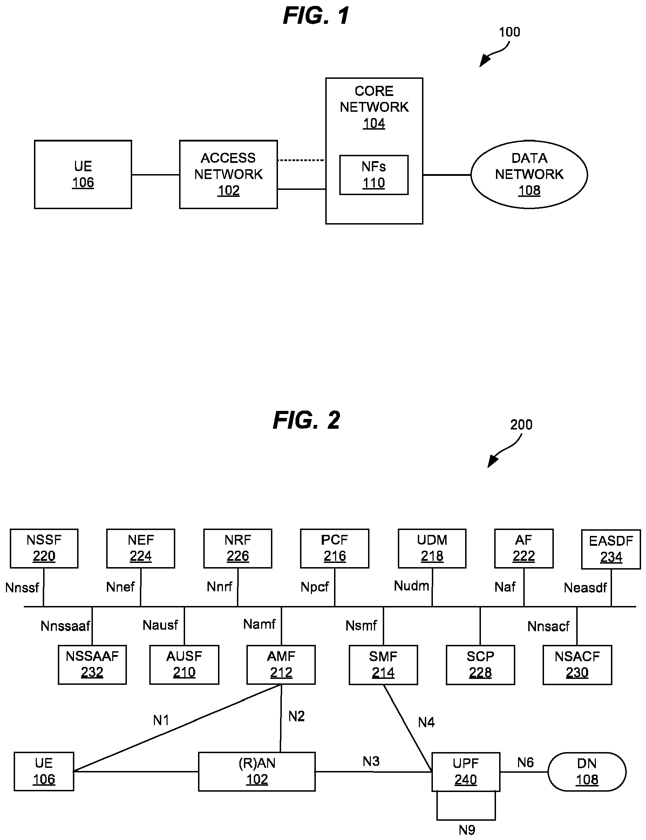

FIG. 1 illustrates a high-level architecture of a 5G system 100. A 5G system (5GS) 100 is a communication system (e.g., a 3GPP system) comprising a 5G Access Network ((R)AN) 102, a 5G core network (5GC) 104, and 5G User Equipment (UE) 106. Access network 102 provides radio or wireless connectivity to UE 106, and connects UE 106 to 5GC 104. Access network 102 may comprise a Next Generation Radio Access Network (NG-RAN), a non-3GPP access network, or another type of RAN connecting to 5GC 104. Access network 102 may support Evolved-UMTS Terrestrial Radio Access Network (E-UTRAN) access (e.g., through an eNodeB, gNodeB, and/or ng-eNodeB), Wireless Local Area Network (WLAN) access, fixed access, satellite radio access, new Radio Access Technologies (RAT), etc. 5GC 104 interconnects access network 102 with a data network (DN) 108. 5GC 104 is comprised of Network Functions (NF) 110, which may be implemented either as a network element on dedicated hardware, as a software instance running on dedicated hardware, as a virtualized function instantiated on an appropriate platform (e.g., a cloud infrastructure), etc. Data network 108 may be an operator external public or private data network, or an intra-operator data network (e.g., for IMS services). UE 106 (also referred to as a mobile terminal) is a 5G capable device configured to register with 5GC 104 to access services. UE 106 may be an end user device, such as a mobile phone (e.g., smartphone), a tablet, a computer with a mobile broadband adapter, etc. UE 106 may be enabled for voice services, data services, Machine-to-Machine (M2M) or Machine Type Communications (MTC) services, and/or other services.

FIG. 2 illustrates a non-roaming architecture 200 of a 5G system. The architecture 200 in FIG. 2 is a service-based representation, as is further described in 3GPP TS 23.501 (v18.0.0), which is incorporated by reference as if fully included herein. Architecture 200 is comprised of Network Functions (NF) for a 5GC 104, and the NFs for the control plane (CP) are separated from the user plane (UP). The control plane of the 5GC 104 includes an Authentication Server Function (AUSF) 210, an Access and Mobility Management Function (AMF) 212, a Session Management Function (SMF) 214, a Policy Control Function (PCF) 216, a Unified Data Management (UDM) 218, a Network Slice Selection Function (NSSF) 220, and an Application Function (AF) 222. The control plane of the 5GC 104 further includes a Network Exposure Function (NEF) 224, a NF Repository Function (NRF) 226, a Service Communication Proxy (SCP) 228, a Network Slice Admission Control Function (NSACF) 230, a Network Slice-specific and SNPN Authentication and Authorization Function (NSSAAF) 232, and an Edge Application Server Discovery Function (EASDF) 234. The user plane of the 5GC 104 includes one or more User Plane Functions (UPF) 240 that communicate with data network 108. UE 106 is able to access the control plane and the user plane of the core network 104 through (R)AN 102.

There are a large number of subscribers that are able to access services from a carrier that implements a mobile network comprising a 5G system 100, such as in FIGS. 1-2. Communications between the subscribers (i.e., through a UE) and the mobile network are protected by security mechanisms, such as the ones standardized by the 3GPP. Subscribers and the carrier expect security guarantees from the security mechanisms. One of the security mechanisms is the primary authentication procedure that provides mutual authentication between the UE and the network. The following further illustrates primary authentication.

The purpose of the primary authentication and key agreement procedures is to enable mutual authentication between UE 106 and the home network of the UE 106, and provide keying material that can be used between the UE 106 and the serving network in subsequent security procedures. The home network represents an operator network or carrier network through which a subscriber (e.g., UE 106) has a subscription for services. The serving network has radio access equipment able to communicate with UE 106 via radio signals. The keying material generated by the primary authentication and key agreement procedure results in an anchor key (called the K_{SEAF} key) provided by the AUSF 210 of the home network to the Security Anchor Function (SEAF) of the serving network. The SEAF provides authentication functionality via the AMF 212 in the serving network, and supports primary authentication using a Subscription Concealed Identifier (SUCI) that contains the concealed Subscription Permanent Identifier (SUPI). The SUPI is a globally unique 5G identifier allocated to each subscriber in the 5G system 100. The SUCI is composed a SUPI type, a Home Network Identifier (HN-ID) identifying the home network of the subscriber, a Routing Indicator (RID) that is assigned to the subscriber by the home network operator and provisioned in the Universal Subscriber Identity Module (USIM) of the UE, a Protection Scheme Identifier, a Home Network Public Key Identifier, and a Scheme Output. The anchor key (K_{SEAF}) is derived from an intermediate key called the K_{AUSF} key. The K_{AUSF} key is established between the UE 106 and the home network resulting from the primary authentication procedure.

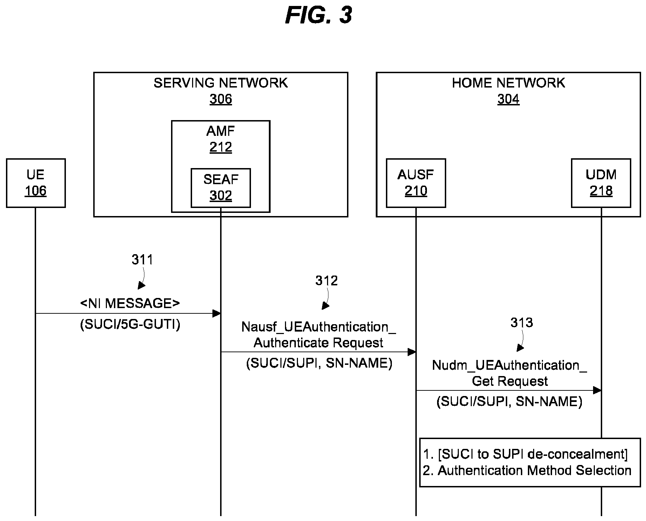

FIG. 3 is a signaling diagram that illustrates initiation of primary authentication, such as described in 3GPP TS 33.501 (v18.0.0), which is incorporated by reference as if fully included herein. UE 106 transmits an N1 message 311 (i.e., an initial Non-Access Stratum (NAS) message) to the serving network 306 (e.g., the AMF 212 of the serving network 306), such as a Registration Request. UE 106 uses the SUCI or a 5G Global Unique Temporary Identifier (5G-GUTI) in the Registration Request. SEAF 302 of the AMF 212 may initiate an authentication with UE 106 during any procedure establishing a signaling connection with UE 106. SEAF 302 invokes the Nausf_UEAuthentication service toward the home network 304 by sending a Nausf_UEAuthentication_Authenticate Request message 312 to AUSF 210 to initiate an authentication. The Nausf_UEAuthentication_Authenticate Request message 312 includes the SUCI or SUPI, and the serving network name (SN-Name). Upon receiving the Nausf_UEAuthentication_Authenticate Request message 312, AUSF 210 checks that the requesting SEAF 302 in the serving network 306 is entitled to use the serving network name in the Nausf_UEAuthentication_Authenticate Request message 312 by comparing the serving network name with the expected serving network name. When the serving network 306 is authorized to use the serving network name, AUSF 210 sends a Nudm_UEAuthentication_Get Request message 313 to UDM 218. The Nudm_UEAuthentication_Get Request message 313 includes the SUCI or SUPI, and the serving network name. Upon reception of the Nudm_UEAuthentication_Get Request message 313, UDM 218 identifies the SUPI (if received), or invokes a Subscription Identifier De-concealing Function (SIDF) that de-conceals the SUPI from the SUCI (if received). UDM 218 (or an Authentication credential Repository and Processing Function (ARPF) of UDM 218) selects or chooses the authentication method for primary authentication based on the SUPI.

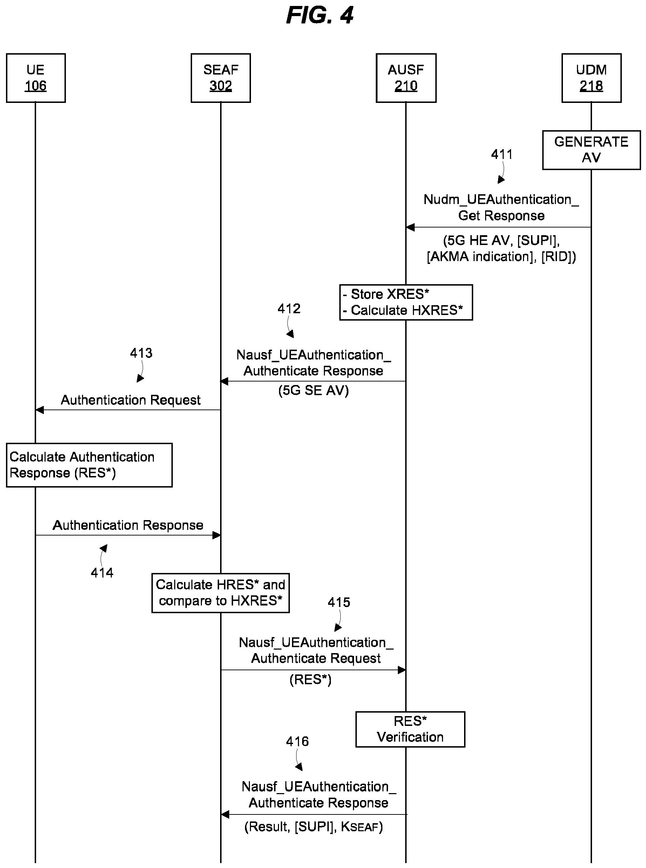

FIG. 4 is a signaling diagram that illustrates a primary authentication procedure, such as described in 3GPP TS 33.501. In this example, 5G Authentication and Key Agreement (AKA) is described, but similar concepts apply for Extensible Authentication Protocol AKA prime (EAP-AKA"). For a Nudm_UEAuthentication_Get Request, UDM 218 creates a 5G Home Environment Authentication Vector (5G HE AV) for the selected authentication method. UDM 218 derives the K_{AUSF} key and calculates an expected response (XRES*) to a challenge. UDM 218 creates the 5G HE AV comprising an authentication token (AUTN), the expected response (XRES*), the K_{AUSF} key, and a random challenge (RAND). UDM 218 then sends a Nudm_UEAuthentication_Get Response message 411 to AUSF 210 with the 5G HE AV to be used for authentication (e.g., 5G AKA in FIG. 4). In case the SUCI was included in the Nudm_UEAuthentication_Get Request, UDM 218 includes the SUPI in the Nudm_UEAuthentication_Get Response message 411 after de-concealment of the SUPI from the SUCI. If a subscriber has an Authentication and Key Management for Application (AKMA) subscription, UDM 218 includes an AKMA indication and the RID in the Nudm_UEAuthentication_Get Response message 411.

In response to the Nudm_UEAuthentication_Get Response message 411, AUSF 210 stores the expected response (XRES*) temporarily with the received SUCI or SUPI. AUSF 210 then generates a 5G Authentication Vector (5G AV) from the 5G HE AV received from UDM 218, by computing a hash expected response (HXRES*) from the expected response (XRES*) and the K_{SEAF} key from the K_{AUSF} key, and replacing the XRES* with the HXRES* and the K_{AUSF} key with the K_{SEAF} key in the 5G HE AV. AUSF 210 removes the K_{SEAF} key to generate a 5G Serving Environment Authentication Vector (5G SE AV) that includes the authentication token (AUTN), hash expected response (HXRES*), and the random challenge (RAND). AUSF 210 sends a Nausf_UEAuthentication_Authenticate Response message 412 to SEAF 302 that includes the 5G SE AV. In response, SEAF 302 sends the authentication token (AUTN) and the random challenge (RAND) to UE 106 in a NAS message Authentication Request message 413.

Although not shown in FIG. 4, UE 106 includes Mobile Equipment (ME) and a USIM. The ME receives the authentication token (AUTN) and the random challenge (RAND) in the NAS message Authentication Request message 413, and forwards the authentication token (AUTN) and the random challenge (RAND) to the USIM. The USIM of UE 106 verifies the freshness of the received values by checking whether the authentication token (AUTN) can be accepted. If so, the USIM computes a response (RES), a cipher key (CK), and an integrity key (IK) based on the random challenge (RAND), and returns the response (RES), the CK key, and the IK key to the ME. The ME of UE 106 computes RES* from RES, and calculates the K_{AUSF} key from CK∥IK and the K_{SEAF} key from the K_{AUSF} key.

UE 106 sends a NAS message Authentication Response message 414 to SEAF 302 that includes RES*. In response, SEAF 302 computes HRES* from RES*, and compares HRES* and HXRES*. If they coincide, SEAF 302 considers the authentication successful from the serving network point of view. SEAF 302 sends RES*, as received from UE 106, in a Nausf_UEAuthentication_Authenticate Request message 415 to AUSF 210. When AUSF 210 receives the Nausf_UEAuthentication_Authenticate Request message 415 including a RES* as authentication confirmation, AUSF 210 stores the K_{AUSF} key based on the home network operator's policy, and compares the received RES* with the stored XRES*. If the RES* and XRES* are equal, then AUSF 210 considers the authentication successful from the home network point of view. AUSF 210 informs UDM 218 about the authentication result (not shown). AUSF 210 also sends a Nausf_UEAuthentication_Authenticate Response message 416 to SEAF 302 indicating whether or not the authentication was successful from the home network point of view. If the authentication was successful, the K_{SEAF} key is sent to SEAF 302 in the Nausf_UEAuthentication_Authenticate Response message 416. In case AUSF 210 received the SUCI from SEAF 302 in the authentication request, AUSF 210 includes the SUPI in the Nausf_UEAuthentication_Authenticate Response message 416 if the authentication was successful.

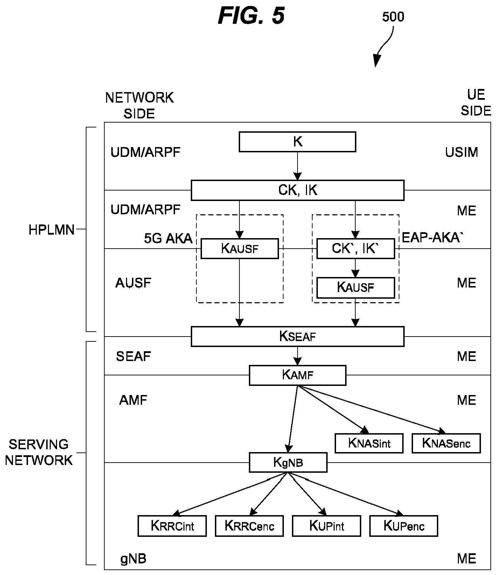

FIG. 5 illustrates a key hierarchy 500 of a 5G system 100, such as in 3GPP TS 33.501 (section 6.2). The keys related to authentication include the following keys: K, CK, and IK. The key hierarchy 500 includes the following keys: K_{AUSF}, K_{SEAF}, K_{AMF}, K_{NASint}, and K_{NASenc}. The keys for AUSF 210 in the home network 304 include the K_{AUSF} key derived by the ME of a UE and AUSF 210 from CK', IK' in case of EAP-AKA', or by the ME and the ARPF of UDM 218 from CK, IK in case of 5G AKA. The K_{SEAF} key is the anchor key derived by the ME and AUSF 210 from the K_{AUSF} key. The key for AMF 212 in the serving network 306 is the K_{AMF} key derived by the ME and the SEAF from the K_{SEAF} key. The keys for NAS signaling (i.e., of a NAS security context) include the K_{NASint} key derived by the ME and AMF 212 from the K_{AMF} key, which is used for integrity protection of NAS signaling with a particular integrity algorithm. The keys for NAS signaling also include the K_{NASenc} key derived by the ME and AMF 212 from the K_{AMF} key, which is used for encryption protection of NAS signaling with a particular encryption algorithm. The key for the NG-RAN is the K_{gNB} key derived by the ME and AMF 212 from K_{AMF}. For an AS security context, the keys for UP traffic include the K_{UPenc} key derived by the ME and the gNB from the K_{gNB} key, which is used for encryption protection of UP traffic with a particular encryption algorithm. The keys for UP traffic further include the K_{UPint} key derived by the ME and the gNB from the K_{gNB} key, which is used for integrity protection of UP traffic between the ME and the gNB with a particular integrity algorithm. The keys for RRC signaling include the K_{RRCint} key derived by the ME and the gNB from the K_{gNB} key, which is used for integrity protection of RRC signaling with a particular integrity algorithm. The keys for RRC signaling further include the K_{RRCenc} key derived by the ME and the gNB from the K_{gNB} key, which is used for encryption protection of RRC signaling with a particular encryption algorithm. There are other keys as part of the key hierarchy 500 of a 5G system 100, which are not discussed for the sake of brevity.

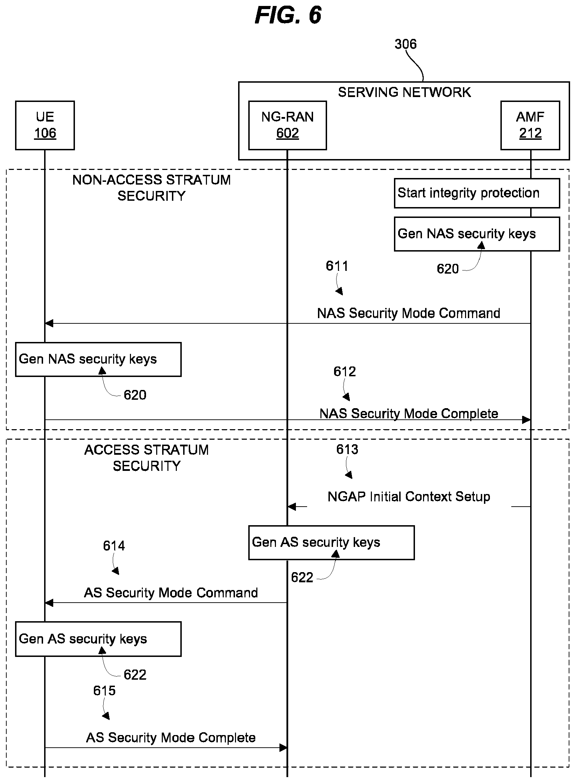

FIG. 6 illustrates a NAS and AS security procedure, such as described in 3GPP TS 33.501 (sections 6.4 and 6.7, respectively). If authentication of UE 106 is successful, such as in FIG. 4, AMF 212 selects the NAS integrity protection and ciphering algorithms. Using the key derivative function, with selected algorithms and algorithm type distinguisher and received K_{AMF} key, AMF 212 generates the NAS integrity key and the NAS encryption key (e.g., K_{NASint} and K_{NASenc}), which are generally referred to as NAS security keys 620. The AMF 212 starts integrity protection for downlink NAS messages. AMF 212 sends a NAS Security Mode Command message 611 to UE 106 with integrity protection and containing the selected ciphering algorithm, integrity algorithm, and ngKSI. AMF 212 activates NAS uplink de-ciphering after sending the NAS Security Mode Command message 611. If the initial NAS message (e.g., N1 message 311 in FIG. 3) was protected but did not pass the integrity check or the AMF 212 could not decrypt the complete initial NAS message in the NAS container, then AMF 212 includes, in the Security Mode Command message 611, a flag requesting the UE 106 to send the complete initial NAS message in the NAS Security Mode Complete message 612.

UE 106 verifies the NAS Security Mode Command integrity and, if successful, begins uplink ciphering, downlink deciphering, and integrity protection. The UE 106 with the received algorithms, generates the NAS integrity and encryption keys (i.e., NAS security keys 620) in the same manner as AMF 212. UE 106 then sends the NAS Security Mode Complete message 612 to AMF 212 that is ciphered and integrity protected. Furthermore, the NAS Security Mode Complete message 612 may include the complete initial NAS message in a NAS Container if either requested by AMF 212, or the UE 106 sent the initial NAS message unprotected.

AMF 212 de-ciphers and checks the integrity protection of the received NAS Security Mode Complete message 612 using the key and algorithm indicated in the NAS Security Mode Command message 611. NAS downlink ciphering at the AMF 212 will start after receiving the NAS Security Mode Complete message 612. AMF 212 generates the K_{gNB} key with uplink NAS COUNT, K_{AMF}, and access type distinguisher (3GPP or non-3GPP access). AMF 212 sends the UE 5G security capabilities with ciphering and integrity protected algorithms and K_{gNB} key in the NG Application Protocol (NGAP) Initial Context Setup message 613 to the NG-RAN 602 (e.g., gNB). The gNB chooses the integrity and ciphering algorithm which has the highest priority from its configured list and presents it in the UE 5G security capabilities received from AMF 212. The gNB generates the RRC integrity key (K_{RRCint}) and the UP integrity key (K_{UPint}) from inputs of the K_{gNB} key, selected AS integrity algorithm, and algorithm type distinguisher. The gNB also generates the RRC ciphering key (K_{RRCenc}) and UP ciphering key (K_{UPenc}) from inputs of the K_{gNB} key, selected AS encryption algorithm, and algorithm type distinguisher. The integrity keys and encryption keys are generally referred to as AS security keys 622. The gNB starts integrity protection for RRC messages. The gNB sends an integrity protected AS Security Mode Command message 614 to UE 106 with the integrity algorithm and ciphering algorithm. The RRC downlink ciphering at the gNB starts after sending the AS Security Mode Command message 614.

UE 106 verifies the AS Security Mode Command integrity and, if successful, starts the RRC integrity protection and RRC downlink de-ciphering. UE 106 generates control plane and data plane encryption and integrity keys (i.e., AS security keys 622) similar to the gNB. UE 106 then sends an AS Security Mode Complete message 615 with integrity protection to the gNB. The RRC uplink ciphering at the UE 106 starts after sending the AS Security Mode Complete message 615. Integrity of the AS Security Mode Complete message 615 is verified at the gNB, and gNB starts the RRC uplink deciphering.

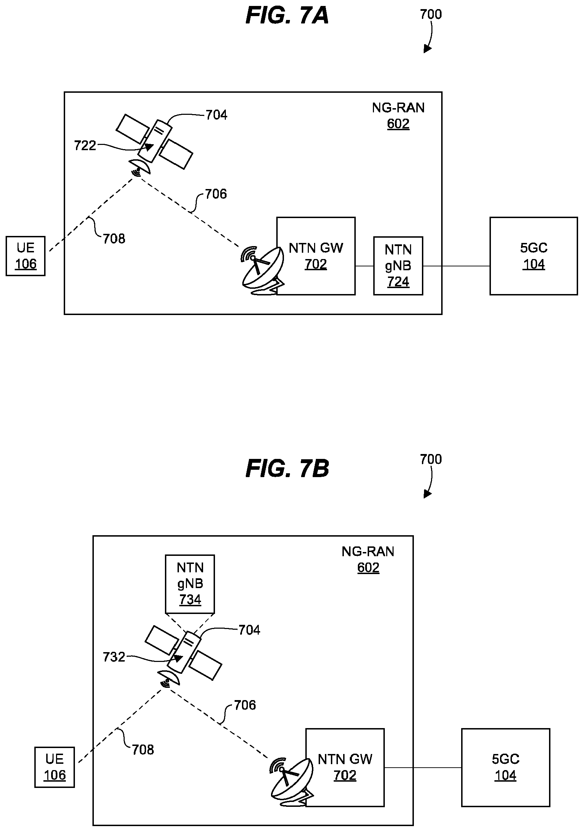

As described above, an NG-RAN 602 may support satellite access to a UE 106, which is also referred to as Non-Terrestrial Network (NTN) access. FIGS. 7A-7B illustrate NTN-based NG-RAN architectures 700. Non-terrestrial networks are networks, or segments of networks, using an airborne or space-borne vehicle to embark a transmission equipment relay node or base station. In the NTN-based NG-RAN architectures 700 of FIGS. 7A-7B, the NG-RAN 602 includes an NTN gateway 702, an NTN satellite 704, a feeder link 706 (or radio link) between the NTN gateway 702 and the NTN satellite 704, and a service link 708 (or radio link) between the UE 106 and the NTN satellite 704. NTN gateway 702 comprises an earth station or gateway located at the surface of Earth, which provides sufficient Radio Frequency (RF) power and RF sensitivity for accessing the NTN satellite 704. NTN gateway 702 connects to the 5GC 104. NTN satellite 704 is a space-borne vehicle placed into Low-Earth Orbit (LEO), Medium-Earth Orbit (MEO), or Geostationary Earth Orbit (GEO). NTN satellite 704 may implement either a transparent payload or a regenerative (with on board processing) payload. A transparent payload performs RF filtering, frequency conversion, and amplification. Thus, the waveform signal repeated by the transparent payload is un-changed. A regenerative payload performs RF filtering, frequency conversion, and amplification, as well as demodulation/decoding, switching and/or routing, and coding/modulation. This is effectively equivalent to having all or part of the base station functions (e.g., gNB) on board the NTN satellite 704. In FIG. 7A, the NG-RAN 602 is based on a transparent satellite. Thus, NTN satellite 704 implements a transparent payload 722, and NG-RAN 602 includes a base station (referred to as NTN gNB 724 or on-ground NTN gNB 724) that is on-ground. In FIG. 7B, the NG-RAN 602 is based on a regenerative satellite. Thus, NTN satellite 704 implements a regenerative payload 732, and NG-RAN 602 includes a base station (referred to as NTN gNB 734 or on-board NTN gNB 734) that is on board NTN satellite 704. NTN-based NG-RAN architectures are further described in 3GPP TR 38.821 (v16.1.0), which is incorporated by reference as if fully included herein.

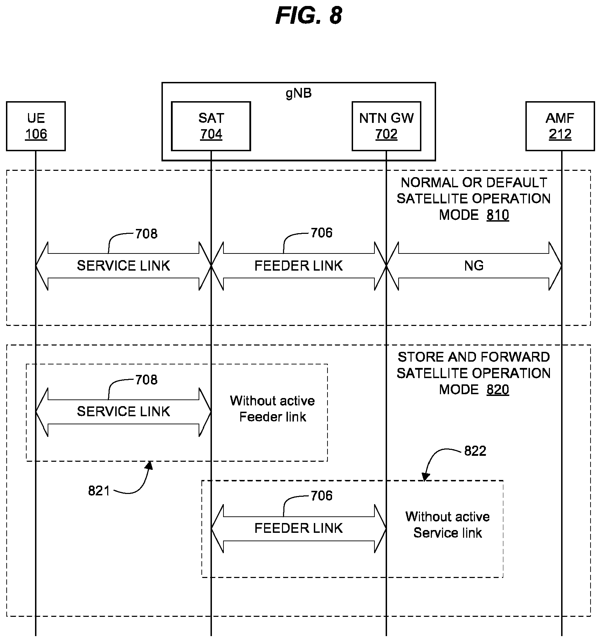

FIG. 8 illustrates different satellite operation modes, which include a "normal/default satellite operation" mode 810 and a "store and forward satellite operation" mode 820. In the normal/default satellite operation mode 810, signaling and data traffic exchange between a UE 106 with satellite access (i.e., direct connectivity) and the remote ground network requires the service link 708 and the feeder link 706 be active simultaneously. At the time that the UE 106 interacts over the service link 708 with the NTN satellite 704, there is a continuous end-to-end connectivity path between the UE 106, the NTN satellite 704, and the ground network (e.g., NTN gateway 702).

However, there may be scenarios where a UE 106 has intermittent satellite access (it is assumed that the UE 106 also does not have access via a terrestrial-based NG-RAN (or other terrestrial-based access)). In such a scenario, the store and forward (S&F) satellite operation mode 820 may be used. In general, S&F satellite operation is an operation mode of a 5G system 100 offering satellite access where the 5G system 100 can provide some level of service (in storing and forwarding the data) when satellite connectivity is intermittently or temporarily unavailable. Thus, in the S&F satellite operation mode 820, the end-to-end exchange of signaling and data traffic is handled as a combination of two steps not concurrent in time. In step 821, signaling/data exchange between the UE 106 and the NTN satellite 704 takes place, without the NTN satellite 704 being simultaneously connected to the ground network (i.e., the NTN satellite 704 is able to operate the service link 708 without an active feeder link 706 connection). In step 822, connectivity between the NTN satellite 704 and the ground network is established so that communication between the NTN satellite 704 and the ground network can take place. So, the NTN satellite 704 goes from being connected to the UE 106 in step 821 to being connected to the ground network in step 822 (or vice-versa).

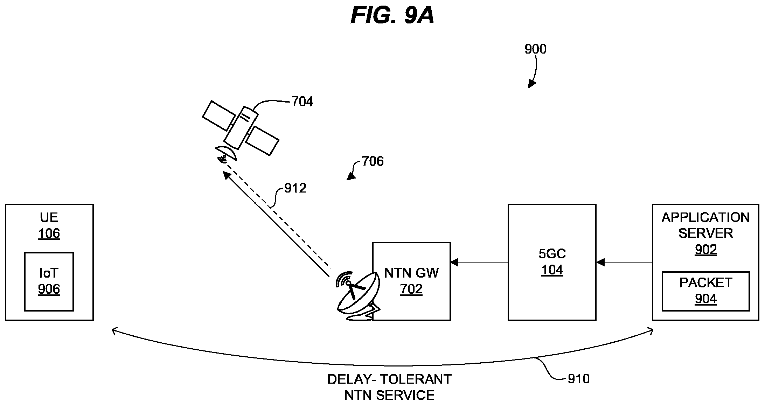

Several use cases have been studied for the S&F satellite operation mode 820, such as described in 3GPP TR 22.865 (v0.2.0), which is incorporated by reference as if fully included herein. One use case is a store and forward service for Mobile Terminated (MT) messages. FIGS. 9A-9B illustrate a store and forward service 900 for MT messages in an illustrative embodiment. The use case in FIGS. 9A-9B illustrates a store and forward service 900 between a UE 106 with satellite access or NTN access, and an application server (AS) 902 for a delay-tolerant NTN service 910 (also referred to as a non-real-time NTN service). For a delay-tolerant NTN service 910, end-to-end connectivity is not required between the UE 106 and the application server 902. For example, UE 106 may comprise an Internet of Things (IoT) device 906 in an embodiment, where the application server 902 desires to send a packet 904 to IoT device 906 when IoT device 906 is accessible via an NTN satellite 704. Thus, the use case in FIGS. 9A-9B may include a store and forward service 900 between an IoT device 906 with satellite access, and application server 902 for a delay-tolerant IoT NTN service (also referred to as a non-real-time IoT NTN service). One technical benefit is IoT devices 906 are able to connect and communicate with one another and perform a variety of tasks without the need for human intervention.

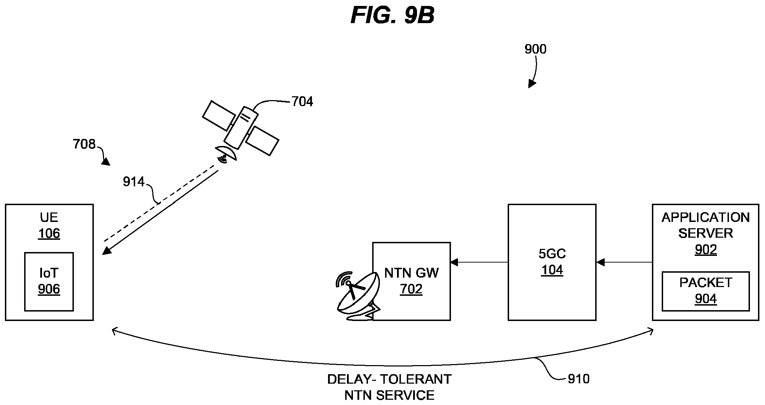

Assume, for example, that application server 902 wants to send a message to UE 106. The payload of the message is generally referred to herein as a packet 904, which comprises any data, parameters (e.g., configuration parameters), instructions, etc., intended for UE 106. Application server 902 formats and sends the packet 904 to the network (i.e., to the network entry-point). The 5GC 104 sends the packet 904 to NTN gateway 702, which stores the packet 904 until it can be delivered or relayed to an NTN satellite 704 expected to fly over and provide coverage to UE 106. When a radio connection 912 (also referred to as a radio link, a feeder link 706, a feeder link connection, etc.) is established between the NTN satellite 704 and the ground network (i.e., NTN gateway 702) as shown in FIG. 9A, NTN gateway 702 uploads the packet 904 to the NTN satellite 704, which stores the packet 904. In FIG. 9B, when flying over the area that the UE 106 is located, the NTN satellite 704 with the stored packet 904 triggers paging over the service link 708 for the UE 106 to connect to the network. A radio connection 914 (also referred to as a radio link, a service link 708, a service link connection, etc.) is established between the NTN satellite 704 and the UE 106, and the NTN satellite 704 delivers or downloads the stored packet 904 to the UE 106.

Security may be an issue with the store and forward services such as this. As there is no end-to-end connectivity between the network and a UE 106, existing security mechanisms may not apply. For example, when there is no end-to-end connectivity, the AS security context is released, and the AS security keys 622 as described in FIG. 6 are removed. AS security keys 622 are used in existing security mechanisms for encryption and integrity protection, but cannot be applied for store and forward services.

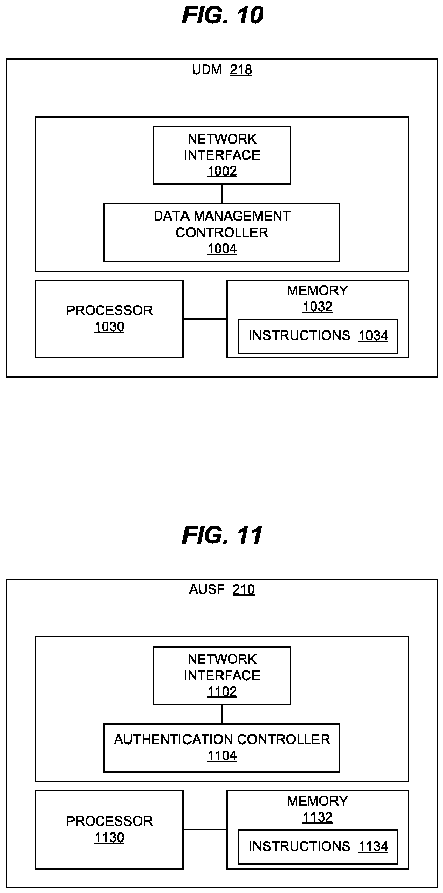

In embodiments described herein, enhanced security mechanisms are set forth for store and forward services. In general, the network functions/elements involved in store and forward services may include a UDM 218 and/or an AUSF 210 of a home network 304, an AMF 212 and/or an NTN satellite 704 of a serving network 306, and the UE 106. Block diagrams for these network functions/elements are provided in FIGS. 10-14.

FIG. 10 is a block diagram of a UDM 218 in an illustrative embodiment. UDM 218 is a network element or network function configured to manage network user data within the 5G core network 104. In this embodiment, UDM 218 includes the following subsystems: a network interface component 1002, and a data management controller 1004 that operate on one or more platforms. Network interface component 1002 may comprise circuitry, logic, hardware, means, etc., configured to exchange control plane messages or signaling with other network elements and/or UEs. Network interface component 1002 may operate using a variety of protocols or reference points. Data management controller 1004 may comprise circuitry, logic, hardware, means, etc., configured to support services, operations, procedures, or functions of a UDM.

One or more of the subsystems of UDM 218 may be implemented on a hardware platform comprised of analog and/or digital circuitry. For example, data management controller 1004 may be implemented on one or more processors 1030 that execute instructions 1034 (i.e., computer readable code) for software that are loaded into memory 1032. A processor 1030 comprises an integrated hardware circuit configured to execute instructions 1034 to provide the functions of UDM 218. Processor 1030 may comprise a set of one or more processors or may comprise a multi-processor core, depending on the particular implementation. Memory 1032 is a non-transitory computer readable storage medium for data, instructions, applications, etc., and is accessible by processor 1030. Memory 1032 is a hardware storage device capable of storing information on a temporary basis and/or a permanent basis. Memory 1032 may comprise a random-access memory, or any other volatile or non-volatile storage device. One or more of the subsystems of UDM 218 may be implemented on a cloud-computing platform or another type of processing platform.

UDM 218 may include various other components not specifically illustrated in FIG. 10.

FIG. 11 is a block diagram of an AUSF 210 in an illustrative embodiment. AUSF 210 is a network element or network function configured to perform authentication with a UE. In this embodiment, AUSF 210 includes the following subsystems: a network interface component 1102, and an authentication controller 1104 that operate on one or more platforms. Network interface component 1102 may comprise circuitry, logic, hardware, means, etc., configured to exchange control plane messages or signaling with other network elements and/or UEs. Network interface component 1102 may operate using a variety of protocols or reference points. Authentication controller 1104 may comprise circuitry, logic, hardware, means, etc., configured to support operations, procedures, or functions of an AUSF.

One or more of the subsystems of AUSF 210 may be implemented on a hardware platform comprised of analog and/or digital circuitry. One or more of the subsystems of AUSF 210 may be implemented on one or more processors 1130 that execute instructions 1134 (i.e., computer readable code) for software that are loaded into memory 1132. One or more of the subsystems of AUSF 210 may be implemented on a cloud-computing platform or another type of processing platform.

AUSF 210 may include various other components not specifically illustrated in FIG. 11.

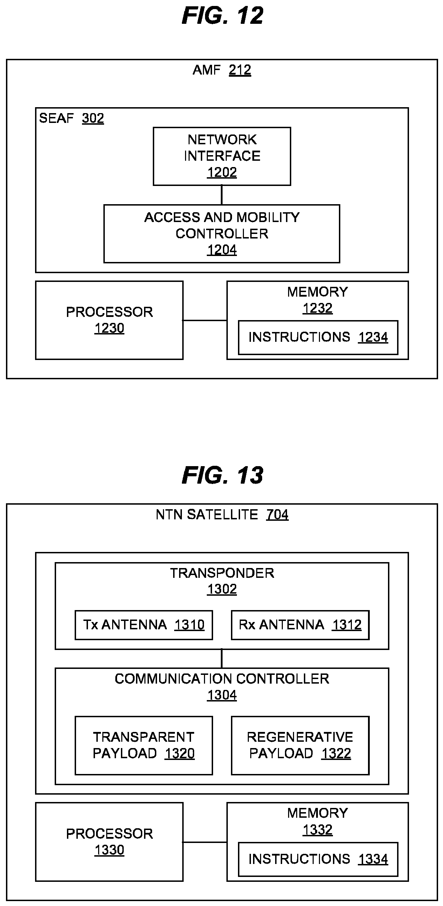

FIG. 12 is a block diagram of an AMF 212 in an illustrative embodiment. AMF 212 is a network element or network function configured to provide registration management of a UE. In this embodiment, AMF 212 includes the following subsystems: a network interface component 1202, and an access and mobility controller 1204 that operate on one or more platforms. Network interface component 1202 may comprise circuitry, logic, hardware, means, etc., configured to exchange control plane messages or signaling with other network elements and/or UEs. Network interface component 1202 may operate using a variety of protocols or reference points. Access and mobility controller 1204 may comprise circuitry, logic, hardware, means, etc., configured to support operations, procedures, or functions of an AMF.

One or more of the subsystems of AMF 212 may be implemented on a hardware platform comprised of analog and/or digital circuitry. One or more of the subsystems of AMF 212 may be implemented on one or more processors 1230 that execute instructions 1234 (i.e., computer readable code) for software that are loaded into memory 1232. One or more of the subsystems of AMF 212 may be implemented on a cloud-computing platform or another type of processing platform.

AMF 212 may include various other components not specifically illustrated in FIG. 12.

FIG. 13 is a block diagram of an NTN satellite 704 in an illustrative embodiment. In this embodiment, NTN satellite 704 includes the following subsystems: a transponder 1302, and a communication controller 1304 that operate on one or more platforms. Transponder 1302 may comprise circuitry, logic, hardware, means, etc., configured to transmit and receive wireless or radio signals. In an embodiment, transponder 1302 includes one or more transmit (Tx) antennas 1310 configured to transmit wireless signals for reception by a UE 106, NTN gateway 702, etc. Transponder 1302 also includes one or more receive (Rx) antennas 1312 configured to receive wireless signals transmitted by a UE 106, NTN gateway 702, etc. Communication controller 1304 may comprise circuitry, logic, hardware, means, etc., configured to support operations, procedures, or functions of an NTN satellite 704. For example, communication controller 1304 may implement a transparent payload 1320 or a regenerative payload 1322.

One or more of the subsystems of NTN satellite 704 may be implemented on a hardware platform comprised of analog and/or digital circuitry. One or more of the subsystems of NTN satellite 704 may be implemented on one or more processors 1330 that execute instructions 1334 (i.e., computer readable code) for software that are loaded into memory 1332.

NTN satellite 704 may include various other components not specifically illustrated in FIG. 13.

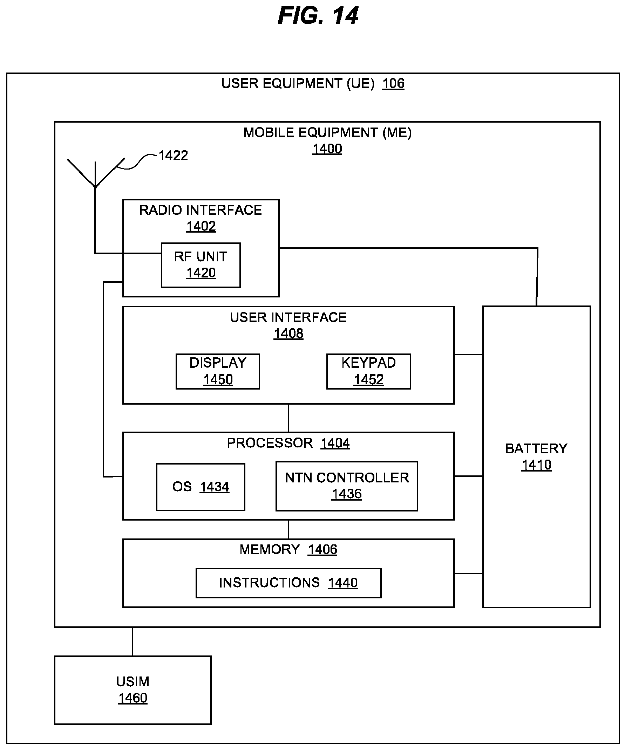

FIG. 14 is a block diagram of a UE 106 in an illustrative embodiment. From a functional standpoint, UE 106 is composed of at least two parts: Mobile Equipment (ME) 1400 and a Universal Subscriber Identity Module (USIM) 1460. ME 1400 includes a radio interface component 1402, one or more processors 1404, a memory 1406, a user interface component 1408. UE 106 may also comprise a battery 1410. Radio interface component 1402 is a hardware component that represents the local radio resources of UE 106, such as an RF unit 1420 (e.g., one or more radio transceivers) and one or more antennas 1422. Radio interface component 1402 may be configured for WiFi, Bluetooth, 5G NR, LTE, satellite, etc. Processor 1404 represents the internal circuitry, logic, hardware, means, etc., that provides the functions of UE 106. Processor 1404 may be configured to execute instructions 1440 for software that are loaded into memory 1406. Processor 1404 may execute an Operating System (OS) 1434 for UE 106 that manages hardware and software resources, and one or more applications. Processor 1404 may implement an NTN controller 1436 configured to control NTN communications. User interface component 1408 is a hardware component for interacting with an end user. For example, user interface component 1408 may include a display 1450, screen, touch screen, or the like (e.g., a Liquid Crystal Display (LCD), a Light Emitting Diode (LED) display, etc.). User interface component 1408 may include a keyboard or keypad 1452, a tracking device (e.g., a trackball or trackpad), a speaker, a microphone, etc.

USIM 1460 is an integrated circuit that provides security and integrity functions for UE 106. USIM 1460 includes or is provisioned with a subscription profile associated with a subscription of a subscriber. A subscription profile may include a variety of information, such as subscription credentials (e.g., SUPI) used to uniquely identify a subscription and to mutually authenticate the UE 106 and a network.

UE 106 may include various other components not specifically illustrated in FIG. 14.

### Embodiment 1

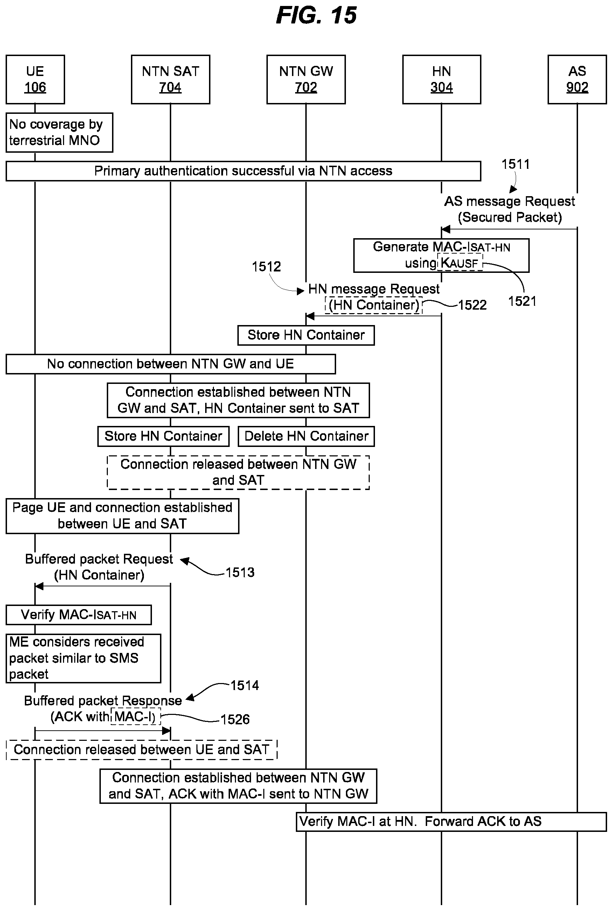

FIG. 15 is a message diagram illustrating a store and forward service for MT messages in an illustrative embodiment. As an overview of the store and forward service in FIG. 15, the home network (HN) 304 of a UE 106 provides integrity protection (and possibly encryption protection) of a packet 904 destined for the UE 106 via satellite/NTN access. For integrity protection, the home network 304 derives an NTN Message Authentication Code (MAC) based on a home network key. An NTN MAC as described herein is a MAC generated or derived to verify or authenticate a packet (or secured packet) at a UE delivered via a store and forward service.

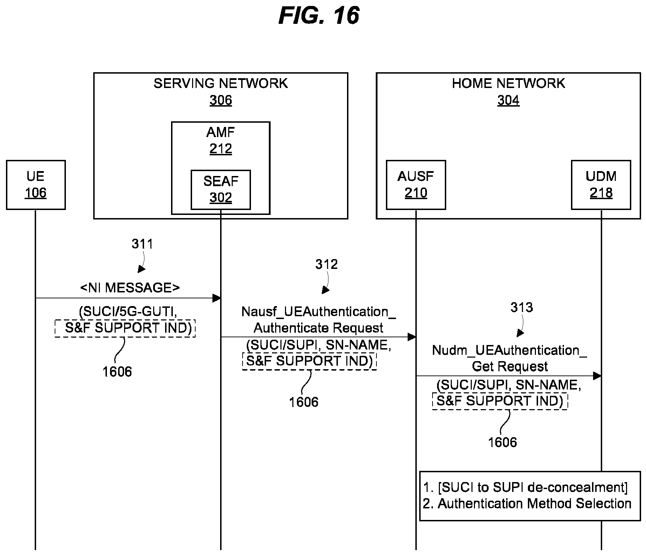

In FIG. 15, it is assumed that UE 106 does not have coverage via a terrestrial Mobile Network Operator (MNO). When UE 106 sends an initial registration request to the home network 304 via NTN access, a store and forward support indicator for "store and forward mode" may be set or not set. FIG. 16 is a signaling diagram that illustrates initiation of primary authentication in an illustrative embodiment. As in FIG. 3, UE 106 transmits an N1 message 311 (i.e., an initial NAS message) to the serving network 306 (e.g., the AMF 212 of the serving network 306), such as a Registration Request. In an embodiment, UE 106 inserts or includes a store and forward (S&F) support indicator 1606 in the N1 message 311, which is a value, flag, etc., indicating whether UE 106 supports a store and forward service (i.e., supports store and forward satellite operation mode 820) via NTN access. AMF 212 (i.e., SEAF 302) may also include or insert the store and forward (S&F) support indicator 1606 in the Nausf UEAuthentication_Authenticate Request message 312 to AUSF 210. AUSF 210 may also include or insert the store and forward (S&F) support indicator 1606 in the Nudm_UEAuthentication_Get Request message 313 to UDM 218. The support indicator is considered when a packet 904 is sent to the UE 106. If the support indicator is not set, then an entity considers that UE 106 supports the normal or default satellite operation mode 810.

In FIG. 15, when application server 902 wants to send a packet 904 to UE 106 (i.e., packet 904 represents a Mobile Terminated (MT) message), application server 902 formats the packet 904, and may cipher or encrypt the packet 904 as a secured packet. Application server 902 then sends an Application Server (AS) message request 1511 to the home network 304 with the packet 904 (secured or plain text). When the packet 904 received from the application server 902 is not secured, the home network 304 may cipher or encrypt the packet 904 to generate a secured packet.

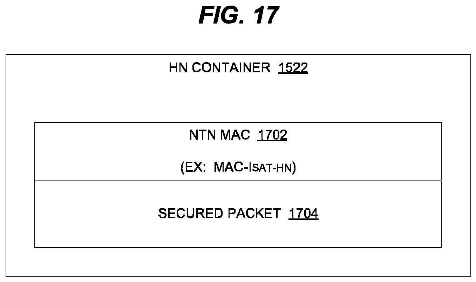

In response to the AS message request 1511, the home network 304 determines whether the UE 106 supports a store and forward service via NTN access, such as based on the store and forward (S&F) support indicator 1606 provided by the UE 106. When the UE 106 supports the store and forward service, the home network 304 may invoke an S&F satellite operation mode 820. To provide integrity protection, home network 304 (through UDM 218 and/or AUSF 210) generates or derives an NTN MAC (also referred to MAC-I_{SAT-HN}) based on the secured packet and a home network key 1521 (e.g., K_{AUSF} key). A home network key 1521 is a key derived within the home network 304, such as by AUSF 210. Home network 304 then sends an HN message request 1512 to NTN gateway 702 with the secured packet and the NTN MAC contained in a HN container 1522. FIG. 17 is a block diagram illustrating a HN container 1522 in an illustrative embodiment. In a message from the network to the UE 106, HN container 1522 includes the NTN MAC 1702 generated by the home network 304 (e.g., MAC-I_{SAT-HN}) and the secured packet 1704.

In FIG. 15, NTN gateway 702 stores the HN container 1522. At this time, there may be no connection existing between UE 106 and NTN gateway 702 via an NTN satellite 704, so NTN gateway 702 waits for a connection to an NTN satellite 704. Subsequently, a radio connection 912 (e.g., a first radio connection) is established between NTN gateway 702 and an NTN satellite 704. With the radio connection 912 established, NTN gateway 702 forwards the HN container 1522 to the NTN satellite 704, and the NTN satellite 704 stores the HN container 1522. NTN gateway 702 may also delete the local copy of the HN container 1522 after receiving an acknowledgement from the NTN satellite 704, after a retention period, etc. After receipt of the HN container 1522 at the NTN satellite 704, the radio connection 912 between the NTN satellite 704 and NTN gateway 702 may be released.

At this time, there is no connection existing between the NTN satellite 704 and UE 106, so NTN satellite 704 waits for the UE 106 to be visible. NTN satellite 704 pages UE 106, and a radio connection 914 (e.g., a second radio connection) is established between the NTN satellite 704 and UE 106. With the radio connection 914 established, NTN satellite 704 sends a buffered packet request 1513 to UE 106 with the HN container 1522. No separate encryption is needed at the AS level, as the HN container 1522 is integrity protected at the HN level and ciphered at the HN level or the application level.

On receiving the buffered packet request 1513, UE 106 derives or computes an NTN MAC in the same way as home network 304 based on the received secured packet 1704 and the home network key 1521 (e.g., K_{AUSF} key), and verifies whether it matches the received NTN MAC 1702 received in the HN container 1522. If verification of the NTN MAC 1702 is successful, then the ME 1400 of UE 106 considers the secured packet 1704 similar to an SMS packet, and forwards the secured packet 1704 to the USIM 1460 for de-ciphering.

If the home network 304 has requested an acknowledgement from UE 106 and UE 106 has successfully verified the secured packet 1704, then UE 106 sends a buffered packet response 1514 to NTN satellite 704. UE 106 generates an NTN MAC-I 1526, and includes an acknowledgement with the NTN MAC-I 1526 in the buffered packet response 1514. The radio connection 914 between the NTN satellite 704 and NTN gateway 702 may be released. If the radio connection 912 between the NTN satellite 704 and NTN gateway 702 was previously released, then a radio connection 912 (i.e., a third radio connection) is established again between the NTN satellite 704 and NTN gateway 702. With the radio connection 912 established, NTN satellite 704 forwards the acknowledgement with the NTN MAC-I 1526 to NTN gateway 702. NTN gateway 702 in turn forwards the acknowledgement with the NTN MAC-I 1526 to the home network 304. The home network 304 compares the received NTN MAC-I 1526 with the expected NTN MAC-I to verify that UE 106 successfully received the secured packet 1704. The home network 304 may also forward the acknowledgement to the application server 902.

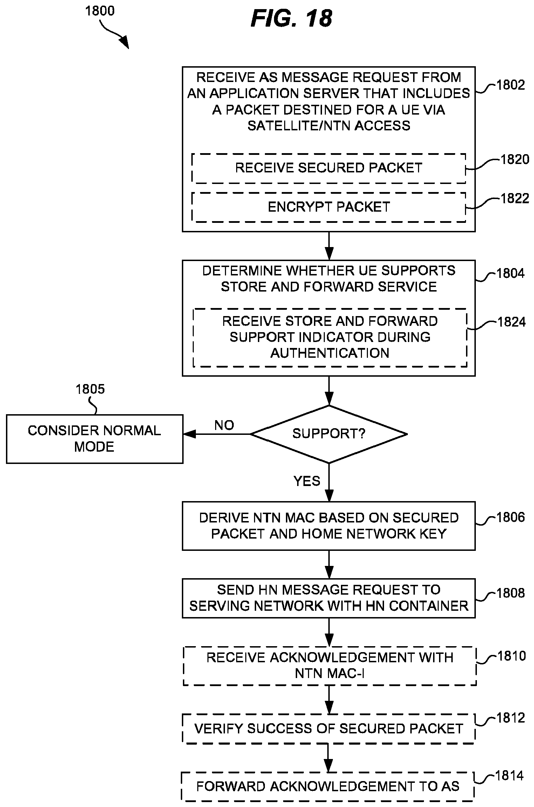

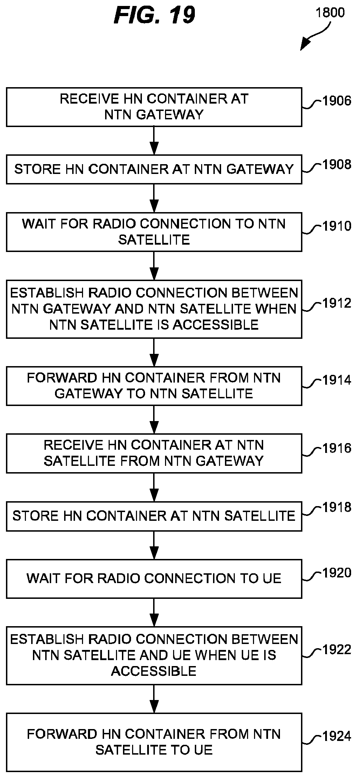

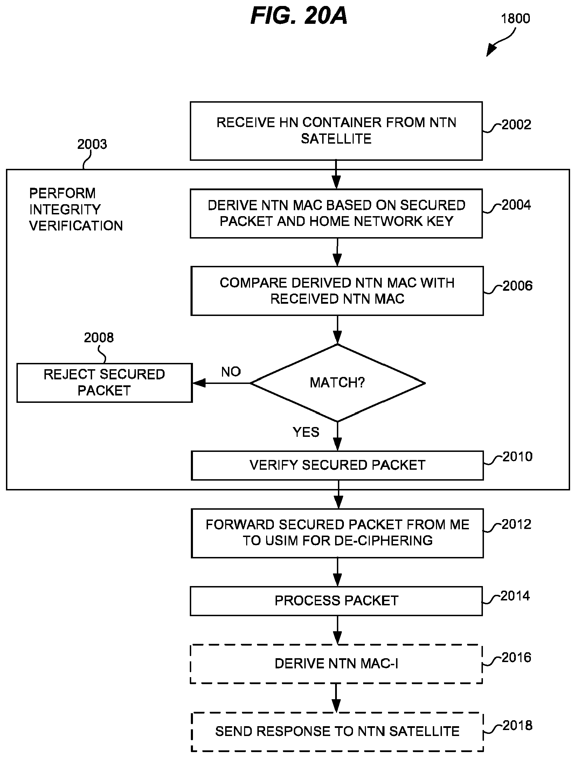

FIGS. 18-19 and 20A-20B are flow charts illustrating a method 1800 of performing a store and forward service for MT messages in an illustrative embodiment. More particularly, the steps of method 1800 in FIG. 18 will be described with reference to home network 304 (e.g., UDM 218 in FIG. 10 and/or AUSF 210 in FIG. 11), the steps of method 1800 in FIG. 19 will be described with reference to the serving network 306 (e.g., AMF 212 in FIG. 12, NTN gateway 702, and/or NTN satellite 704 in FIG. 13), and the steps of method 1800 in FIGS. 20A-20B will be described with reference to UE 106 in FIG. 14. Those skilled in the art will appreciate that method 1800 may be performed in other systems, devices, or network functions. The steps of the flow charts described herein are not all inclusive and may include other steps not shown, and the steps may be performed in an alternative order.

In FIG. 18, the home network 304 receives an AS message request 1511 (e.g., a first message request) from an application server 902 that includes a packet 904 destined for UE 106 via satellite/NTN access (step 1802). For example, UDM 218 of the home network 304 may receive the AS message request 1511 from the application server 902. In an embodiment, the packet 904 received from the application server 902 is a secured packet 1704 ciphered or encrypted by the application server 902 (optional step 1820). In an embodiment, the packet 904 received from the application server 902 is in plain text, and the home network 304 (e.g., UDM 218) may cipher or encrypt the packet 904 to generate a secured packet 1704 (optional step 1822).

In response to the AS message request 1511, the home network 304 determines whether the UE 106 supports a store and forward service via NTN access (step 1804). The home network 304 may determine whether UE 106 supports a store and forward service via NTN access in a variety of ways. For example, data management controller 1004 of UDM 218 may query a Unified Data Repository (UDR), a Home Subscriber Server (HSS), or another network function to acquire subscription information or capabilities information regarding UE 106. In an embodiment, data management controller 1004 of UDM 218 may receive a store and forward (S&F) support indicator 1606 during primary authentication of UE 106 (optional step 1824). One technical benefit is the home network 304 receives the capabilities of the UE 106, such as during primary authentication.

When the UE 106 does not support a store and forward service, the home network 304 considers that UE 106 supports the normal or default satellite operation mode 810 (step 1805). When the UE 106 supports a store and forward service, the home network 304 may invoke an S&F satellite operation mode 820. To provide integrity protection, the home network 304 (through UDM 218 and/or AUSF 210) generates or derives an NTN MAC 1702 (also referred to MAC-I_{SAT-HN} of first MAC) based on the secured packet 1704 and a home network key 1521 (e.g., K_{AUSF} key) (step 1806). For example, UDM 218 may invoke an NTN Protection service or the like by sending a request message to AUSF 210 to get the NTN MAC 1702. AUSF 210 computes or derives the NTN MAC 1702, and delivers the NTN MAC 1702 to UDM 218 in a response message. AUSF 210 may compute or derive the NTN MAC 1702 using the secured packet 1704 as an input parameter to a Key Derivation Function (KDF) using the home network key 1521 (K_{AUSF}) as the key. However, other input parameters are considered herein. For example, an NTN counter (e.g., Counter_{NTN}) may be defined as a freshness input into NTN MAC 1702 derivation. When the UDM 218 requests acknowledgement from the UE 106, AUSF 210 may also compute or derive an expected NTN MAC-I, and return the expected NTN MAC-I in the response message. The expected NTN MAC-I allows UDM 218 to verify that the UE 106 received the secured packet 1704 correctly.

The home network 304 then sends a HN message request 1512 (e.g., second message request) to the serving network 306 (i.e., toward NTN gateway 702) with the secured packet 1704 and the NTN MAC 1702 contained in a HN container 1522 (step 1808). For example, UDM 218 may invoke the Nudm_SDM_Notification service operation, and transmit an Nudm_SDM_Notification message to AMF 212 which includes the HN container 1522. One technical benefit is the secured packet 1704 is integrity protected even though there is no end-to-end connectivity of the UE 106 and the network.

In FIG. 19, NTN gateway 702 receives the HN container 1522 sent by the home network 304 (step 1906), and stores the HN container 1522 (step 1908). At this time, there may be no connection existing between UE 106 and NTN gateway 702 via an NTN satellite 704, so NTN gateway 702 waits for a radio connection (e.g., a first radio connection) to an NTN satellite 704 (step 1910). When an NTN satellite 704 is accessible, NTN gateway 702 establishes a radio connection 912 between the NTN gateway 702 and the NTN satellite 704 (step 1912). With the radio connection 912 established, NTN gateway 702 forwards the HN container 1522 to the NTN satellite 704 over radio connection 912 (step 1914).

NTN satellite 704 receives the HN container 1522 from NTN gateway 702 (step 1916), and stores the HN container 1522 (step 1918). At this time, there is no connection existing between the NTN satellite 704 and UE 106, so the NTN satellite 704 waits for a radio connection to UE 106 (step 1920). NTN satellite 704 pages UE 106, and establishes a radio connection 914 (e.g., second radio connection) between the NTN satellite 704 and UE 106 (step 1922) when UE 106 is visible or accessible. With the radio connection 914 established, the NTN satellite 704 forwards the HN container 1522 to UE 106 over radio connection 914 (step 1924), such as by sending the buffered packet request 1513.

In FIG. 20A, UE 106 receives the HN container 1522 from the NTN satellite 704 (step 2002). Upon receiving the HN container 1522, UE 106 performs integrity verification (step 2003) of the secured packet 1704 in the HN container 1522. Thus, NTN controller 1436 of UE 106 derives or computes an NTN MAC (e.g., MAC-I_{SAT-HN}) (step 2004) in the same way as the home network 304 based on the secured packet 1704 and the home network key 1521. For example, NTN controller 1436 may compute or derive the NTN MAC using the secured packet 1704 as an input parameter to a KDF using the home network key 1521 (K_{AUSF}) as the key. NTN controller 1436 then compares the derived NTN MAC with the received NTN MAC 1702 received in the HN container 1522 to determine whether they match (step 2006). When the derived NTN MAC and the received NTN MAC 1702 do not match, NTN controller 1436 rejects the secured packet 1704 (step 2008). When the derived NTN MAC and the received NTN MAC 1702 match, NTN controller 1436 verifies integrity of the secured packet 1704 (step 2010). When integrity verification is successful, UE 106 de-ciphers or decrypts the secured packet 1704 (step 2012), and processes the packet 904 (step 2014).

Integrity verification may be performed at the ME 1400 of UE 106. To further process the secured packet 1704 at UE 106, NTN controller 1436 of ME 1400 may forward the secured packet 1704 to USIM 1460 for de-ciphering of the secured packet 1704 (step 2012). UE 106 may then process the (de-ciphered) packet 904 (step 2014). One technical benefit is the UE 106 may perform integrity verification of the secured packet 1704 even though there is no end-to-end connectivity of the UE 106 and the network.

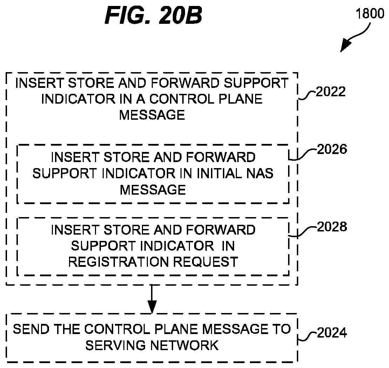

In an embodiment, NTN controller 1436 of UE 106 signals to the network that it supports a store and forward service with a store and forward (S&F) support indicator 1606. In FIG. 20B, prior to a store and forward service, NTN controller 1436 inserts or includes the store and forward (S&F) support indicator 1606 in a control plane message directed to the serving network 306 (optional step 2022). NTN controller 1436 then sends the control plane message to the serving network 306 (optional step 2024). In an embodiment, UE 106 may insert the store and forward (S&F) support indicator 1606 in an initial NAS message (optional step 2026) to the serving network 306 (e.g., the AMF 212 of the serving network 306), such as an N1 message 311 as shown in FIG. 16. One example of an N1 message 311 is a Registration Request provided during primary authentication of UE 106, and UE 106 may insert the store and forward (S&F) support indicator 1606 in a Registration Request (optional step 2028). One technical benefit is UE 106 is able to signal to the network that it supports a store and forward service, such as during primary authentication. However, UE 106 may signal to the network that it supports a store and forward service in other ways.

In FIG. 20A, if the home network 304 has requested an acknowledgement from UE 106 and UE 106 has successfully verified the secured packet 1704, then NTN controller 1436 derives or generates an NTN MAC-I 1526 (e.g., MAC-I) (optional step 2016) in the same manner that the home network 304 derived the expected NTN MAC-I. UE 106 then sends a buffered packet response 1514 to the NTN satellite 704 (optional step 2018). UE 106 includes an acknowledgement with the NTN MAC-I 1526 in the buffered packet response 1514.

As in FIG. 15, NTN satellite 704 receives the buffered packet response 1514 from UE 106. If the radio connection 912 between the NTN satellite 704 and NTN gateway 702 was previously released, then a radio connection 912 is established between NTN satellite 704 and NTN gateway 702. With the radio connection 912 established, NTN satellite 704 forwards the acknowledgement with the NTN MAC-I 1526 to NTN gateway 702. NTN gateway 702 in turn forwards the acknowledgement with the NTN MAC-I 1526 to the home network 304. In FIG. 18, home network 304 (e.g., UDM 218) receives the acknowledgement with the NTN MAC-I 1526 (optional step 1810), and compares the received NTN MAC-I 1526 with the expected NTN MAC-I to verify that UE 106 successfully received the secured packet 1704 (optional step 1812). The home network 304 may also forward the acknowledgement to the application server 902 (optional step 1814).

### Embodiment 2

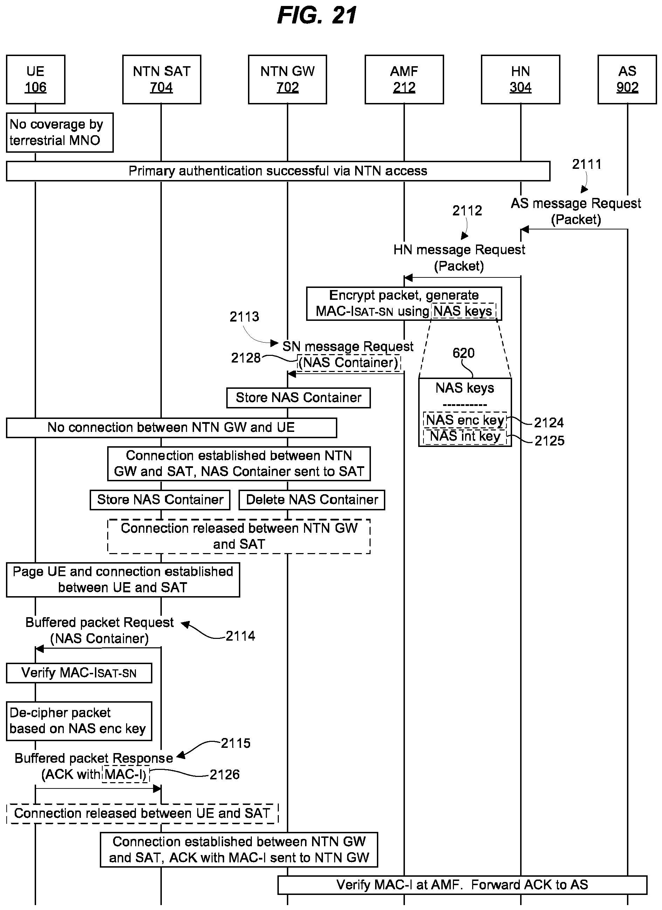

FIG. 21 is a message diagram illustrating a store and forward service for MT messages in an illustrative embodiment. As an overview of the store and forward service in FIG. 21, the serving network (SN) 306 of a UE 106 provides encryption protection and integrity protection of a packet 904 destined for the UE 106 via satellite/NTN access. For integrity protection, the serving network 306 derives an NTN MAC based on NAS security keys 620.

In FIG. 21, it is assumed that UE 106 does not have coverage via a terrestrial MNO. When UE 106 sends an initial registration request to the home network 304 via NTN access, a store and forward support indicator 1606 for "store and forward mode" may be set or not set, as shown in FIG. 16. When application server 902 wants to send a packet 904 to UE 106 (i.e., packet 904 represents an MT message), application server 902 formats the packet 904, and sends an AS message request 2111 to the home network 304 with the packet 904 in plain text. The home network 304 then sends a HN message request 2112 to AMF 212 of the serving network 306 with the packet 904 in plain text.

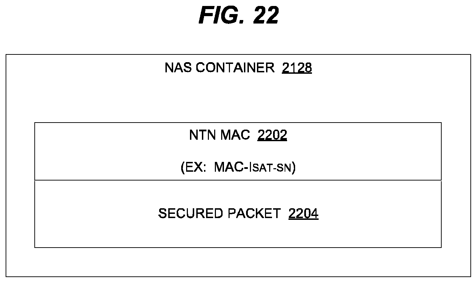

In response to the HN message request 2112, AMF 212 determines whether the UE 106 supports a store and forward service via NTN access, such as based on the store and forward (S&F) support indicator 1606 provided by the UE 106. When the UE 106 supports the store and forward service, AMF 212 may invoke an S&F satellite operation mode 820. To provide encryption protection for the packet 904, AMF 212 ciphers or encrypts the packet 904 using the NAS encryption key 2124 (e.g., K_{NASenc}) to generate a secured packet. To provide integrity protection for the secured packet, AMF 212 generates or derives an NTN MAC (also referred to MAC-I_{SAT-SN}) based on the secured packet and the NAS integrity key 2125 (e.g., K_{NASint}). AMF 212 then sends a SN message request 2113 to NTN gateway 702 with the secured packet and the NTN MAC contained in a NAS container 2128. FIG. 22 is a block diagram illustrating a NAS container 2128 in an illustrative embodiment. In a message from the network to the UE 106, NAS container 2128 includes the NTN MAC 2202 generated by the AMF 212 (e.g., MAC-I_{SAT-SN}) and the secured packet 2204.

NTN gateway 702 stores the NAS container 2128. At this time, there may be no connection existing between UE 106 and NTN gateway 702 via an NTN satellite 704, so NTN gateway 702 waits for a connection to an NTN satellite 704. Subsequently, a radio connection 912 (e.g., a first radio connection) is established between NTN gateway 702 and an NTN satellite 704. With the radio connection 912 established, NTN gateway 702 forwards the NAS container 2128 to the NTN satellite 704, and the NTN satellite 704 stores the NAS container 2128. NTN gateway 702 may also delete the local copy of the NAS container 2128 after receiving an acknowledgement from the NTN satellite 704, after a retention period, etc. After receipt of the NAS container 2128 at the NTN satellite 704, the radio connection 912 between the NTN satellite 704 and NTN gateway 702 may be released.

At this time, there is no connection existing between the NTN satellite 704 and UE 106, so NTN satellite 704 waits for the UE 106 to be visible. NTN satellite 704 pages UE 106, and a radio connection 914 (e.g., a second radio connection) is established between the NTN satellite 704 and UE 106. With the radio connection 914 established, NTN satellite 704 sends a buffered packet request 2114 to UE 106 with the NAS container 2128. No separate encryption is needed at the AS level, as the packet 904 is integrity protected and ciphered at the AMF/NAS level.

On receiving the buffered packet request 2114, UE 106 derives or computes an NTN MAC in the same way as AMF 212 based on the received secured packet 2204 and the NAS integrity key 2125 (e.g., K_{NASint} key), and verifies whether it matches the received NTN MAC 2202 received in the NAS container 2128. If verification of the NTN MAC 2202 is successful, then the UE 106 de-ciphers or decrypts the secured packet 2204 based on the NAS encryption key 2124 (e.g., K_{NASenc} key), and processes the packet 904 as desired.

If the AMF 212 has requested an acknowledgement from UE 106 and UE 106 has successfully verified the secured packet 2204, then UE 106 sends a buffered packet response 2115 to NTN satellite 704. UE 106 generates an NTN MAC-I 2126, and includes an acknowledgement with the NTN MAC-I 2126 in the buffered packet response 2115. The radio connection 914 between the NTN satellite 704 and NTN gateway 702 may be released. If the radio connection 912 between the NTN satellite 704 and NTN gateway 702 was previously released, then a radio connection 912 (i.e., a third radio connection) is established again between the NTN satellite 704 and NTN gateway 702. With the radio connection 912 established, NTN satellite 704 forwards the acknowledgement with the NTN MAC-I 2126 to NTN gateway 702. NTN gateway 702 in turn forwards the acknowledgement with the NTN MAC-I 2126 to the AMF 212. AMF 212 compares the received NTN MAC-I 2126 with the expected NTN MAC-I to verify that UE 106 successfully received the secured packet 2204. AMF 212 may also forward the acknowledgement to the application server 902 through the home network 304.

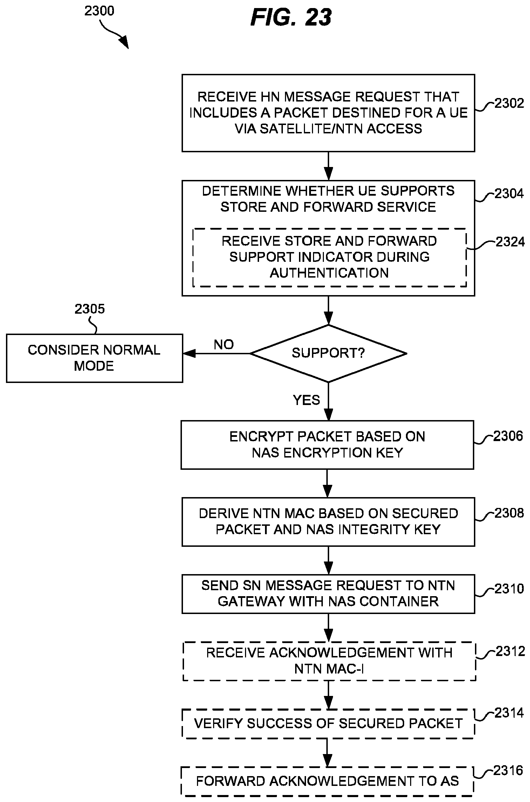

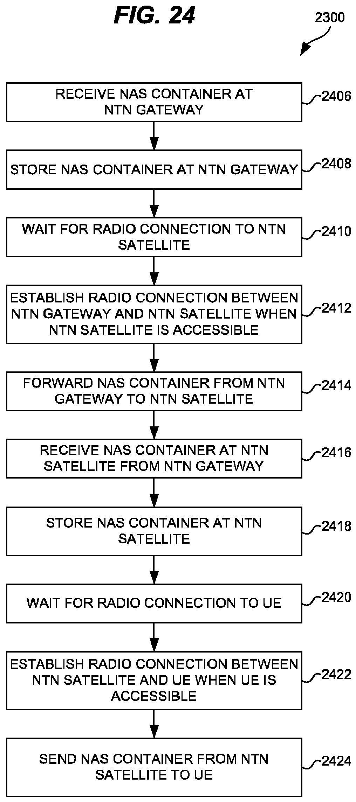

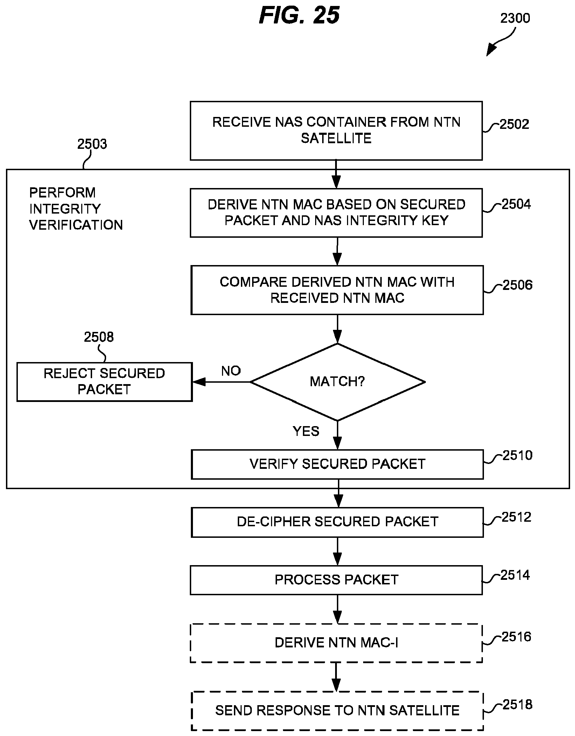

FIGS. 23-25 are flow charts illustrating a method 2300 of performing a store and forward service for MT messages in an illustrative embodiment. More particularly, the steps of method 2300 in FIG. 23 will be described with reference to AMF 212 in FIG. 12, the steps of method 2300 in FIG. 24 will be described with reference to NTN gateway 702 and NTN satellite 704 in FIG. 13, and the steps of method 2300 in FIG. 25 will be described with reference to UE 106 in FIG. 14. Those skilled in the art will appreciate that method 2300 may be performed in other systems, devices, or network functions.

In FIG. 23, access and mobility controller 1204 of AMF 212 receives an HN message request 2112 (e.g., a first message request) from the home network 304 that includes a packet 904 (in plain text) sent by the application server 902 and destined for UE 106 via satellite/NTN access (step 2302). As described above, an application server 902 initiates transmission of the packet 904 to the UE 106 by sending the packet 904 to the home network 304, and the home network 304 forwards the packet 904 to AMF 212.

In response to the HN message request 2112, access and mobility controller 1204 determines whether the UE 106 supports a store and forward service via NTN access (step 2304). The access and mobility controller 1204 may determine whether UE 106 supports a store and forward service via NTN access in a variety of ways. In an embodiment, access and mobility controller 1204 of AMF 212 may receive a store and forward (S&F) support indicator 1606 during primary authentication of UE 106 (optional step 2324). For example, UE 106 may transmit a Registration Request to the serving network 306 during primary authentication (see also, N1 message 311 sent in FIG. 16). UE 106 includes the store and forward (S&F) support indicator 1606 in the Registration Request. One technical benefit is the serving network 306 (i.e., AMF 212) receives the capabilities of the UE 106, such as during primary authentication.

When the UE 106 does not support a store and forward service, access and mobility controller 1204 considers that UE 106 supports the normal or default satellite operation mode 810 (step 2305). When the UE 106 supports a store and forward service, AMF 212 may invoke an S&F satellite operation mode 820. The packet 904 received from the home network 304 is in plain text. To provide encryption protection for the packet 904, access and mobility controller 1204 ciphers or encrypts the packet 904 using the NAS encryption key 2124 (e.g., K_{NASenc} key) to generate a secured packet 2204 (step 2306). To provide integrity protection for the secured packet 2204, access and mobility controller 1204 generates or derives an NTN MAC 2202 (also referred to MAC-I_{SAT-SN} or a first MAC) based on the secured packet 2204 and the NAS integrity key 2125 (e.g., K_{NASint} key) (step 2308). Access and mobility controller 1204 may compute or derive the NTN MAC 2202 using the secured packet 2204 as an input parameter to a KDF using the NAS integrity key 2125 as the key. However, other input parameters are considered herein. For example, an NTN counter (e.g., Counter_{NTN}) may be defined as a freshness input into NTN MAC derivation. When the AMF 212 requests acknowledgement from the UE 106, access and mobility controller 1204 may also compute or derive an expected NTN MAC-I. The expected NTN MAC-I allows AMF 212 to verify that the UE 106 received the secured packet 2204 correctly. Access and mobility controller 1204 then sends a SN message request 2113 (e.g., second request message) to the NTN gateway 702 with a NAS container 2128 containing the secured packet 2204 and the NTN MAC 2202 (step 2310). One technical benefit is the secured packet 2204 is integrity protected even though there is no end-to-end connectivity of the UE 106 and the network.

In FIG. 24, NTN gateway 702 receives the NAS container 2128 from AMF 212 (step 2406), such as in the SN message request 2113, and stores the NAS container 2128 (step 2408). At this time, there may be no connection existing between UE 106 and NTN gateway 702 via an NTN satellite 704, so NTN gateway 702 waits for a radio connection to an NTN satellite 704 (step 2410). When an NTN satellite 704 is accessible, NTN gateway 702 establishes a radio connection 912 (e.g., first radio connection) between the NTN gateway 702 and the NTN satellite 704 (step 2412). With the radio connection 912 established, NTN gateway 702 forwards the NAS container 2128 to the NTN satellite 704 over the radio connection 912 (step 2414).

NTN satellite 704 receives the NAS container 2128 from NTN gateway 702 (step 2416), and stores the NAS container 2128 (step 2418). At this time, there is no connection existing between the NTN satellite 704 and UE 106, so the NTN satellite 704 waits for a radio connection to UE 106 (step 2420). NTN satellite 704 pages UE 106, and establishes a radio connection 914 (e.g., second radio connection) between the NTN satellite 704 and UE 106 (step 2422) when UE 106 is visible or accessible. With the radio connection 914 established, the NTN satellite 704 forwards the NAS container 2128 to UE 106 over the radio connection 914 (step 2424).

In FIG. 25, UE 106 receives the NAS container 2128 from the NTN satellite 704 (step 2502), such as in the buffered packet request 2114. Upon receiving the NAS container 2128, UE 106 performs integrity verification (step 2503) of the secured packet 2204 in the NAS container 2128. NTN controller 1436 of UE 106 derives or computes an NTN MAC (e.g., MAC-I_{SAT-SN} or second MAC) in the same way as AMF 212 based on the secured packet 2204 and the NAS integrity key 2125 (step 2504). For example, NTN controller 1436 may compute or derive the NTN MAC using the secured packet 2204 as an input parameter to a KDF using the NAS integrity key 2125 as the key. NTN controller 1436 then compares the derived NTN MAC with the received NTN MAC 2202 received in the NAS container 2128 to determine whether they match (step 2506). When the derived NTN MAC and the received NTN MAC 2202 do not match, NTN controller 1436 rejects the secured packet 2204 (step 2508). When the derived NTN MAC and the received NTN MAC 2202 match, NTN controller 1436 verifies integrity of the secured packet 2204 (step 2510). When integrity verification is successful, UE 106 de-ciphers or decrypts the secured packet 2204 based on the NAS encryption key 2124 (e.g., K_{NASenc} key) (step 2512), and processes the (de-ciphered) packet 904 (step 2514). One technical benefit is the UE 106 may perform integrity verification of the secured packet 2204 even though there is no end-to-end connectivity of the UE 106 and the network.

In an embodiment, NTN controller 1436 of UE 106 may signal to the network that it supports a store and forward service with a store and forward (S&F) support indicator 1606, similar as described above in FIG. 20B. Thus, NTN controller 1436 inserts or includes the store and forward (S&F) support indicator 1606 in a control plane message directed to the serving network 306 (optional step 2022). NTN controller 1436 then sends the control plane message to the serving network 306 (optional step 2024). In an embodiment, UE 106 may insert the store and forward (S&F) support indicator 1606 in an initial NAS message (optional step 2026) to the serving network 306 (e.g., the AMF 212 of the serving network 306), such as an N1 message 311 as shown in FIG. 16. One example of an N1 message 311 is a Registration Request provided during primary authentication of UE 106, and UE 106 may insert the store and forward (S&F) support indicator 1606 in a Registration Request (optional step 2028). One technical benefit is UE 106 is able to signal to the network that it supports a store and forward service, such as during primary authentication. However, UE 106 may signal to the network that it supports a store and forward service in other ways.

If AMF 212 has requested an acknowledgement from UE 106 and UE 106 has successfully verified the secured packet 2204, then NTN controller 1436 derives or generates an NTN MAC-I 2126 (e.g., MAC-I) (optional step 2516) in the same manner that the AMF 212 derived the expected NTN MAC-I. UE 106 then sends a buffered packet response 2115 to the NTN satellite 704 (optional step 2518). UE 106 includes an acknowledgement with the NTN MAC-I 2126 in the buffered packet response 2115.

As in FIG. 21, NTN satellite 704 receives the buffered packet response 2115 from UE 106. If the radio connection 912 between the NTN satellite 704 and NTN gateway 702 was previously released, then a radio connection 912 is established between NTN satellite 704 and NTN gateway 702. With the radio connection 912 established, NTN satellite 704 forwards the acknowledgement with the NTN MAC-I 2126 to NTN gateway 702. NTN gateway 702 in turn forwards the acknowledgement with the NTN MAC-I 2126 to AMF 212.

In FIG. 23, access and mobility controller 1204 of AMF 212 receives the acknowledgement with the NTN MAC-I 2126 (optional step 2312), and compares the received NTN MAC-I 2126 with the expected NTN MAC-I to verify that UE 106 successfully received the secured packet 2204 (optional step 2314). AMF 212 may also forward the acknowledgement to the application server 902 (optional step 2316).

### Embodiment 3

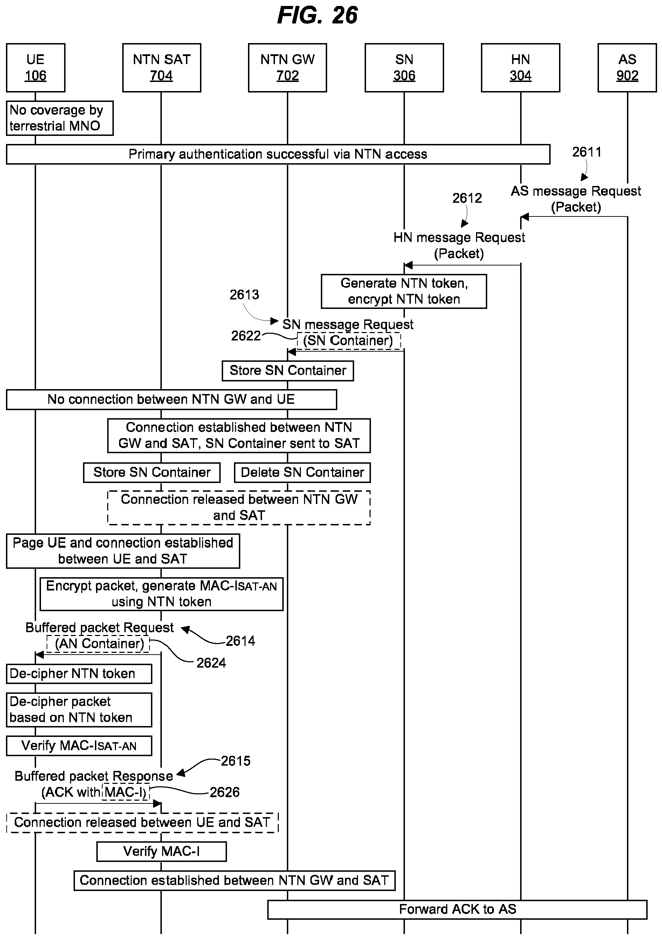

FIG. 26 is a message diagram illustrating a store and forward service for MT messages in an illustrative embodiment. As an overview of the store and forward service in FIG. 26, the NTN satellite 704 provides encryption protection and integrity protection of a packet 904 destined for the UE 106 via satellite/NTN access. NTN satellite 704 provides encryption and/or integrity protection based on a newly-defined NTN token that is generated in the serving network 306. An NTN token is a value generated as a key for encryption protection and integrity protection at an NTN satellite. Because there is no end-to-end connectivity between a UE and the network in a store and forward service, some conventional keys used for encryption and integrity protection are released when the AS security context is released. Thus, an NTN token is generated in the serving network 306, and is used in the NTN satellite 704 as a replacement for a key to a KDF for encryption and/or integrity protection of a packet 904. Although an NTN token is described herein for encryption and integrity protection, it is understood that an encryption NTN token and a separate integrity NTN token may be generated.

In FIG. 26, it is assumed that UE 106 does not have coverage via a terrestrial MNO. When UE 106 sends an initial registration request to the home network 304 via NTN access, a store and forward support indicator for "store and forward mode" may be set or not set, as shown in FIG. 16. When application server 902 wants to send a packet 904 to UE 106 (i.e., packet 904 represents an MT message), application server 902 formats the packet 904, and sends an AS message request 2611 to the home network 304 with the packet 904 in plain text. The home network 304 then sends an HN message request 2612 to the serving network 306 (e.g., AMF 212) with the packet 904 in plain text.

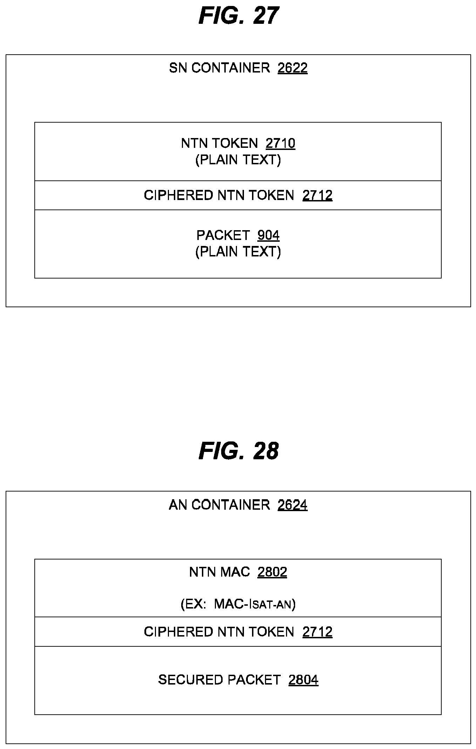

In response to the HN message request 2612, AMF 212 determines whether the UE 106 supports a store and forward service via NTN access, such as based on the store and forward (S&F) support indicator 1606 provided by the UE 106. When the UE 106 supports the store and forward service, AMF 212 may invoke an S&F satellite operation mode 820. AMF 212 generates an NTN token. As described above, an NTN token is a value generated as a key for encryption protection and/or integrity protection at an NTN satellite. For example, the NTN token may be a random number of a defined length (e.g., 128 bits). AMF 212 ciphers or encrypts the NTN token using the NAS encryption key 2124 (e.g., K_{NASenc}) to generate a ciphered NTN token. AMF 212 then sends a SN message request 2613 to NTN gateway 702 with the packet 904 (in plain text), the NTN token (in plain text), and the ciphered NTN token contained in a SN container 2622. FIG. 27 is a block diagram illustrating a SN container 2622 in an illustrative embodiment. In a message from the network to the UE 106, SN container 2622 includes the packet 904 (in plain text), the NTN token 2710 (in plain text), and the ciphered NTN token 2712.

In FIG. 26, NTN gateway 702 stores the SN container 2622. At this time, there may be no connection existing between UE 106 and NTN gateway 702 via an NTN satellite 704, so NTN gateway 702 waits for a connection to an NTN satellite 704. Subsequently, a radio connection 912 (e.g., a first radio connection) is established between NTN gateway 702 and an NTN satellite 704. With the radio connection 912 established, NTN gateway 702 forwards the SN container 2622 to the NTN satellite 704, and the NTN satellite 704 stores the SN container 2622. NTN gateway 702 may also delete the local copy of the SN container 2622 after receiving an acknowledgement from the NTN satellite 704, after a retention period, etc. After receipt of the SN container 2622 at the NTN satellite 704, the radio connection 912 between the NTN satellite 704 and NTN gateway 702 may be released.

At this time, there is no connection existing between the NTN satellite 704 and UE 106, so NTN satellite 704 waits for the UE 106 to be visible. NTN satellite 704 pages UE 106, and a radio connection 914 (e.g., a second radio connection) is established between the NTN satellite 704 and UE 106. In this embodiment, NTN satellite 704 provides encryption and integrity protection for the packet 904. To provide encryption protection for the packet 904, NTN satellite 704 ciphers or encrypts the packet 904 using the NTN token 2710 (in plain text) to generate a secured packet. To provide integrity protection for the secured packet, NTN satellite 704 generates or derives an NTN MAC (also referred to MAC-I_{SAT-AN}) based on the secured packet and the NTN token 2710. With the radio connection 914 established, NTN satellite 704 sends a buffered packet request 2614 to UE 106 with the secured packet, the NTN MAC, and the ciphered NTN token 2712 contained in an AN container 2624. FIG. 28 is a block diagram illustrating an AN container 2624 in an illustrative embodiment. In a message from the network to the UE 106, AN container 2624 includes the secured packet 2804, the NTN MAC 2802, and the ciphered NTN token 2712.

On receiving the buffered packet request 2614, UE 106 de-ciphers or decrypts the ciphered NTN token 2712 based on the NAS encryption key 2124 (e.g., K_{NASenc} key). UE 106 also derives or computes an NTN MAC in the same way as NTN satellite 704 based on the secured packet 2804 and the NTN token 2710, and verifies whether it matches the received NTN MAC 2802 received in the AN container 2624. If verification of the NTN MAC 2802 is successful, then the UE 106 de-ciphers or decrypts the secured packet 2804 based on the NTN token 2710.

If the NTN satellite 704 has requested an acknowledgement from UE 106 and UE 106 has successfully verified the secured packet 2804, then UE 106 sends a buffered packet response 2615 to NTN satellite 704. UE 106 generates an NTN MAC-I 2626, and includes an acknowledgement with the NTN MAC-I 2626 in the buffered packet response 2615. NTN satellite 704 compares the received NTN MAC-I 2626 with the expected NTN MAC-I to verify that UE 106 successfully received the secured packet 2804. NTN satellite 704 may also forward the acknowledgement to the application server 902.

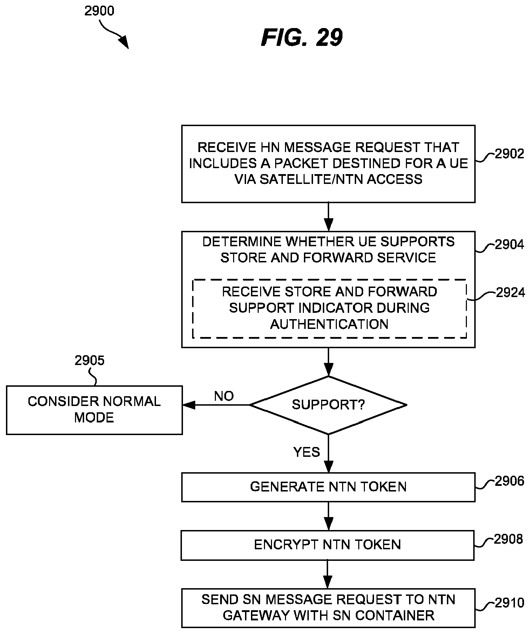

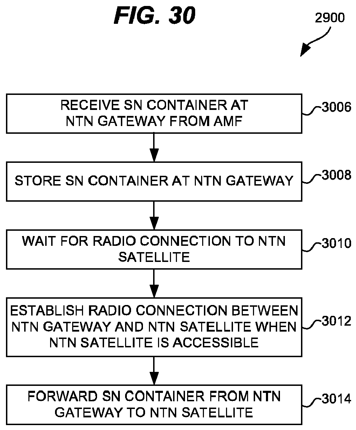

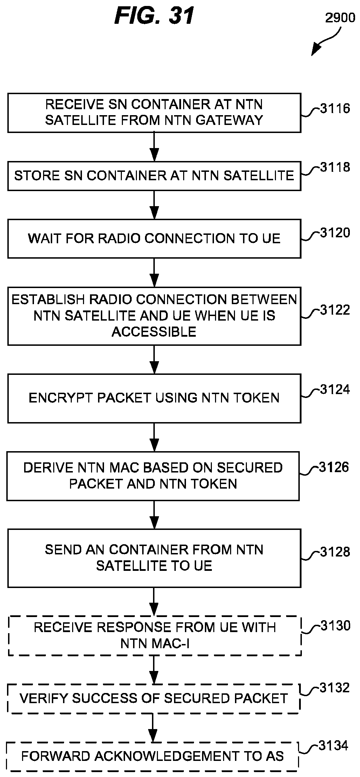

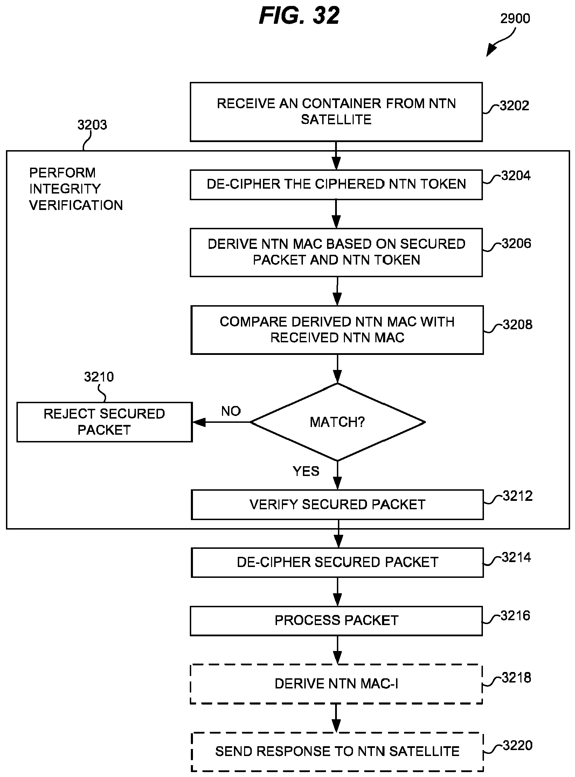

FIGS. 29-32 are flow charts illustrating a method 2900 of performing a store and forward service for MT messages in an illustrative embodiment. More particularly, the steps of method 2900 in FIG. 29 will be described with reference to the serving network 306 (e.g., AMF 212 in FIG. 12), the steps of method 2900 in FIG. 30 will be described with reference to NTN gateway 702, the steps of method 2900 in FIG. 31 will be described with reference to NTN satellite 704 in FIG. 13, and the steps of method 2900 in FIG. 32 will be described with reference to UE 106 in FIG. 14. Those skilled in the art will appreciate that method 2900 may be performed in other systems, devices, or network functions.

In FIG. 29, the serving network 306 (e.g., AMF 212) receives an HN message request 2612 (e.g., first message request) from the home network 304 that includes a packet 904 destined for UE 106 via satellite/NTN access (step 2902). As described above, an application server 902 initiates transmission of the packet 904 to the UE 106 by sending the packet 904 to the home network 304, and the home network 304 forwards the packet 904 to the serving network 306.

In response to the HN message request 2612, access and mobility controller 1204 of AMF 212 determines whether the UE 106 supports a store and forward service via NTN access (step 2904). The access and mobility controller 1204 may determine whether UE 106 supports a store and forward service via NTN access in a variety of ways. In an embodiment, access and mobility controller 1204 of AMF 212 may receive a store and forward (S&F) support indicator 1606 during primary authentication of UE 106 (optional step 2924). For example, UE 106 may transmit a Registration Request to the serving network 306 during primary authentication (see also, N1 message 311 sent in FIG. 16). UE 106 includes the store and forward (S&F) support indicator 1606 in the Registration Request. One technical benefit is the serving network 306 (i.e., AMF 212) receives the capabilities of the UE 106, such as during primary authentication.

When the UE 106 does not support a store and forward service, access and mobility controller 1204 considers that UE 106 supports the normal or default satellite operation mode 810 (step 2905). When the UE 106 supports a store and forward service, the AMF 212 may invoke an S&F satellite operation mode 820. The packet 904 received from the home network 304 is in plain text. AMF 212 generates an NTN token 2710 (step 2906), and ciphers or encrypts the NTN token 2710 using the NAS encryption key 2124 (e.g., K_{NASenc}) to generate a ciphered NTN token 2712 (step 2908). AMF 212 then sends a SN message request 2613 (e.g., second message request) to NTN gateway 702 with the packet 904 (in plain text), the NTN token 2710 (in plain text), and the ciphered NTN token 2712 contained in a SN container 2622 (step 2910).

In FIG. 30, NTN gateway 702 receives the SN container 2622 from AMF 212 (step 3006), such as in the SN message request 2613, and stores the SN container 2622 (step 3008). At this time, there may be no connection existing between UE 106 and NTN gateway 702 via an NTN satellite 704, so NTN gateway 702 waits for a radio connection to an NTN satellite 704 (step 3010). When an NTN satellite 704 is accessible, NTN gateway 702 establishes a radio connection 912 (e.g., first radio connection) between the NTN gateway 702 and the NTN satellite 704 (step 3012). With the radio connection 912 established, NTN gateway 702 forwards the SN container 2622 to the NTN satellite 704 over the radio connection 912 (step 3014).

In FIG. 31, NTN satellite 704 receives the SN container 2622 from NTN gateway 702 (step 3116), such as through transponder 1302, and stores the SN container 2622 (step 3118). The SN container 2622 contains the packet 904 (in plain text), the NTN token 2710 (in plain text), and the ciphered NTN token 2712. At this time, there is no connection existing between the NTN satellite 704 and UE 106, so the NTN satellite 704 waits for a radio connection to UE 106 (step 3120). NTN satellite 704 pages UE 106, and establishes a radio connection 914 (e.g., second radio connection) between the NTN satellite 704 and UE 106 (step 3122) when UE 106 is visible or accessible. In this embodiment, NTN satellite 704 provides encryption and integrity protection of the packet 904. To provide encryption protection of the packet 904, communication controller 1304 of NTN satellite 704 ciphers or encrypts the packet 904 using the NTN token 2710 to generate a secured packet 2804 (step 3124). To provide integrity protection of the secured packet 2804, communication controller 1304 of NTN satellite 704 generates or derives an NTN MAC 2802 (also referred to MAC-I_{SAT-AN} or first MAC) based on the secured packet 2804 and the NTN token 2710 (step 3126). For example, communication controller 1304 may compute or derive the NTN MAC 2802 using the secured packet 2804 as an input parameter to a KDF using the NTN token 2710 as the key. However, other input parameters are considered herein. For example, an NTN counter (e.g., Counter_{NTN}) may be defined as a freshness input into NTN MAC derivation. When the NTN satellite 704 requests acknowledgement from the UE 106, communication controller 1304 may also compute or derive an expected NTN MAC-I. The expected NTN MAC-I allows NTN satellite 704 to verify that the UE 106 received the secured packet 2804 correctly. With the radio connection 914 established, communication controller 1304 forwards an AN container 2624 to UE 106 containing the secured packet 2804, the NTN MAC 2802, and the ciphered NTN token 2712 over the radio connection 914 (step 3128), such as through transponder 1302. One technical benefit is the secured packet 2804 is integrity protected even though there is no end-to-end connectivity of the UE 106 and the network.

In FIG. 32, UE 106 receives the AN container 2624 from the NTN satellite 704 (step 3202). Upon receiving the AN container 2624, UE 106 performs integrity verification 3203 of the secured packet 2804 in the AN container 2624. Thus, NTN controller 1436 of UE 106 de-ciphers or decrypts the ciphered NTN token 2712 based on the NAS encryption key 2124 (e.g., K_{NASenc} key) (step 3204). NTN controller 1436 also derives or computes an NTN MAC (e.g., MAC-I_{SAT-AN} or second MAC) in the same way as NTN satellite 704 based on the secured packet 2804 and the (de-ciphered) NTN token 2710 (step 3206). For example, NTN controller 1436 may compute or derive the NTN MAC using the secured packet 2804 as an input parameter to a KDF using the (de-ciphered) NTN token 2710 (in plain text) as the key. NTN controller 1436 then compares the derived NTN MAC with the received NTN MAC 2802 received in the AN container 2624 to determine whether they match (step 3208). When the derived NTN MAC and the received NTN MAC 2802 do not match, NTN controller 1436 rejects the secured packet 2804 (step 3210). When the derived NTN MAC and the received NTN MAC 2802 match, NTN controller 1436 verifies integrity of the secured packet 2804 (step 3212). When integrity verification is successful, UE 106 de-ciphers or decrypts the secured packet 2804 based on the (de-ciphered) NTN token 2710 (step 3214), and processes the (de-ciphered) packet 904 (step 3216). One technical benefit is the UE 106 may perform integrity verification of the secured packet 2804 even though there is no end-to-end connectivity of the UE 106 and the network.

In an embodiment, NTN controller 1436 of UE 106 may signal to the network that it supports a store and forward service with a store and forward (S&F) support indicator 1606, similar as described above in FIG. 20B. Thus, NTN controller 1436 inserts or includes the store and forward (S&F) support indicator 1606 in a control plane message directed to the serving network 306 (optional step 2022). NTN controller 1436 then sends the control plane message to the serving network 306 (optional step 2024). In an embodiment, UE 106 may insert the store and forward (S&F) support indicator 1606 in an initial NAS message (optional step 2026) to the serving network 306 (e.g., the AMF 212 of the serving network 306), such as an N1 message 311 as shown in FIG. 16. One example of an N1 message 311 is a Registration Request provided during primary authentication of UE 106, and UE 106 may insert the store and forward (S&F) support indicator 1606 in a Registration Request (optional step 2028). One technical benefit is UE 106 is able to signal to the network that it supports a store and forward service, such as during primary authentication. However, UE 106 may signal to the network that it supports a store and forward service in other ways.

If NTN satellite 704 has requested an acknowledgement from UE 106 and UE 106 has successfully verified the secured packet 2804, then NTN controller 1436 derives or generates an NTN MAC-I 2626 (e.g., MAC-I) (optional step 3218) in the same manner that the NTN satellite 704 derived the expected NTN MAC-I. UE 106 then sends a buffered packet response 2615 to the NTN satellite 704 (optional step 3220). UE 106 includes an acknowledgement with the NTN MAC-I 2626 in the buffered packet response 2615.

In FIG. 31, NTN satellite 704 receives the buffered packet response 2615 from UE 106 (optional step 3130). Communication controller 1304 of NTN satellite 704 compares the received NTN MAC-I 2626 with the expected NTN MAC-I to verify that UE 106 successfully received the secured packet 2804 (optional step 3132). NTN satellite 704 may also forward the acknowledgement to the application server 902 (optional step 3134).

Any of the various elements or modules shown in the figures or described herein may be implemented as hardware, software, firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

As used in this application, the term "circuitry" may refer to one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although specific embodiments were described herein, the scope of the disclosure is not limited to those specific embodiments. The scope of the disclosure is defined by the following claims and any equivalents thereof.

## Claims

1. A method of performing a store and forward service for mobile terminated messages to user equipment via satellite access, the method comprising:
receiving, at a home network of the user equipment, a first message request from an application server that includes a secured packet destined for the user equipment via satellite access;
determining, at the home network, whether the user equipment supports the store and forward service via satellite access;
when the user equipment supports the store and forward service:
providing integrity protection of the secured packet at the home network by deriving a first message authentication code based on the secured packet and a home network key; and
sending a second message request to a serving network of the user equipment with the secured packet and the first message authentication code contained in a home network container.

2. The method of claim 1 further comprising:
receiving the home network container at a Non-Terrestrial Network (NTN) gateway of the serving network;
storing the home network container at the NTN gateway;
waiting, at the NTN gateway, for a first radio connection to an NTN satellite;
establishing the first radio connection between the NTN gateway and the NTN satellite;
forwarding the home network container from the NTN gateway to the NTN satellite over the first radio connection;
receiving the home network container at the NTN satellite from the NTN gateway;
storing the home network container at the NTN satellite;
waiting, at the NTN satellite, for a second radio connection to the user equipment;
establishing the second radio connection between the NTN satellite and the user equipment; and
forwarding the home network container from the NTN satellite to the user equipment over the second radio connection.

3. The method of claim 2 further comprising:
receiving the home network container at the user equipment from the NTN satellite; and
performing integrity verification of the secured packet in the home network container by:
deriving, at the user equipment, a second message authentication code based on the secured packet and the home network key;
comparing the second message authentication code with the first message authentication code received in the home network container; and
verifying integrity of the secured packet when the second message authentication code matches the first message authentication code.

4. The method of claim 3, further comprising:
prior to the store and forward service:
inserting, at the user equipment, a store and forward support indicator in a control plane message directed to the serving network, wherein the store and forward support indicator indicates whether the user equipment supports the store and forward service via satellite access; and
sending the control plane message from the user equipment to the serving network.

5. A method of performing a store and forward service for mobile terminated messages to user equipment via satellite access, the method comprising:
receiving, at an Access and Mobility Management Function (AMF) of a serving network of the user equipment, a first message request from a home network of the user equipment, wherein the first message request includes a packet sent by an application server and destined for the user equipment via satellite access;
determining, at the AMF, whether the user equipment supports the store and forward service via satellite access;
when the user equipment supports the store and forward service:
providing encryption protection of the packet at the AMF by encrypting the packet based on a non-access stratum encryption key to generate a secured packet;
providing integrity protection of the secured packet at the AMF by deriving a first message authentication code based on the secured packet and a non-access stratum integrity key; and
sending a second message request from the AMF to a Non-Terrestrial Network (NTN) gateway with the secured packet and the first message authentication code contained in a non-access stratum container.

6. The method of claim 5 further comprising:
receiving the non-access stratum container at the NTN gateway;
storing the non-access stratum container at the NTN gateway;
waiting, at the NTN gateway, for a first radio connection to an NTN satellite;
establishing the first radio connection between the NTN gateway and the NTN satellite;
forwarding the non-access stratum container from the NTN gateway to the NTN satellite over the first radio connection;
receiving the non-access stratum container at the NTN satellite from the NTN gateway;
storing the non-access stratum container at the NTN satellite;
waiting, at the NTN satellite, for a second radio connection to the user equipment;
establishing the second radio connection between the NTN satellite and the user equipment; and
forwarding the non-access stratum container from the NTN satellite to the user equipment over the second radio connection.

7. The method of claim 6 further comprising:
receiving the non-access stratum container at the user equipment from the NTN satellite; and
performing integrity verification of the secured packet in the non-access stratum container by:
deriving, at the user equipment, a second message authentication code based on the secured packet and the non-access stratum integrity key;
comparing the second message authentication code with the first message authentication code received in the non-access stratum container; and
verifying integrity of the secured packet when the second message authentication code matches the first message authentication code.

8. The method of claim 7 further comprising:
de-ciphering the secured packet at the user equipment when the integrity of the secured packet is verified; and
processing the de-ciphered packet at the user equipment.

9. The method of claim 7, further comprising:
prior to the store and forward service:
inserting, at the user equipment, the store and forward support indicator in a control plane message directed to the serving network, wherein the store and forward support indicator indicates whether the user equipment supports the store and forward service via satellite access; and
sending the control plane message from the user equipment to the serving network.

10. A method of performing a store and forward service for mobile terminated messages to user equipment via satellite access, the method comprising:
receiving, at an Access and Mobility Management Function (AMF) of a serving network of the user equipment, a first message request from a home network of the user equipment, wherein the first message request includes a packet sent by an application server and destined for the user equipment via satellite access;
determining, at the AMF, whether the user equipment supports the store and forward service via satellite access;
when the user equipment supports the store and forward service:
generating a Non-Terrestrial Network (NTN) token;
encrypting the NTN token based on a non-access stratum encryption key to generate a ciphered NTN token; and
sending a second message request from the AMF to an NTN gateway with the packet in plain text, the NTN token in plain text, and the ciphered NTN token contained in a serving network container.

11. The method of claim 10 further comprising:
receiving the serving network container at the NTN gateway;
storing the serving network container at the NTN gateway;
waiting, at the NTN gateway, for a first radio connection to an NTN satellite;
establishing the first radio connection between the NTN gateway and the NTN satellite; and
forwarding the serving network container from the NTN gateway to the NTN satellite over the first radio connection.

12. The method of claim 11 further comprising:
receiving, at the NTN satellite, the serving network container from the NTN gateway;
waiting, at the NTN satellite, for a second radio connection to the user equipment;
establishing the second radio connection between the NTN satellite and the user equipment;
providing encryption protection of the packet at the NTN satellite by encrypting the packet using the NTN token in plain text to generate a secured packet;
providing integrity protection of the secured packet at the NTN satellite by deriving a first message authentication code based on the secured packet and the NTN token in plain text; and
forwarding an access network container from the NTN satellite to the user equipment over the second radio connection that contains the first message authentication code, the secured packet, and the ciphered NTN token.

13. The method of claim 12 further comprising:
receiving the access network container at the user equipment from the NTN satellite; and
performing integrity verification of the secured packet in the access network container by:
de-ciphering, at the user equipment, the ciphered NTN token from the access network container based on the non-access stratum encryption key;
deriving, at the user equipment, a second message authentication code based on the secured packet and the de-ciphered NTN token;
comparing the second message authentication code with the first message authentication code received in the access network container; and
verifying integrity of the secured packet when the second message authentication code matches the first message authentication code.

14. The method of claim 13 further comprising:
de-ciphering the secured packet at the user equipment the based on the de-ciphered NTN token when the integrity of the secured packet is verified; and
processing the de-ciphered packet at the user equipment.

15. The method of claim 13, further comprising:
prior to the store and forward service:
inserting, at the user equipment, the store and forward support indicator in a control plane message directed to the serving network, wherein the store and forward support indicator indicates whether the user equipment supports the store and forward service via satellite access; and
sending the control plane message from the user equipment to the serving network.
